(19) Europäisches Patentamt
European Patent Office
Office européen des brevets

(11) **EP 4 383 193 A1**

(12) **EUROPEAN PATENT APPLICATION**
published in accordance with Art. 153(4) EPC

(43) Date of publication:
**12.06.2024 Bulletin 2024/24**

(21) Application number: **22852052.4**

(22) Date of filing: **29.07.2022**

(51) International Patent Classification (IPC):
**G06T 7/246** *(2017.01)*

(86) International application number:
**PCT/CN2022/108896**

(87) International publication number:
**WO 2023/011339 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2021 CN 202110897215**

(71) Applicant: **ARCSOFT CORPORATION LIMITED Zhejiang 310052 (CN)**

(72) Inventors:
- **LING, Rui**
  **Hangzhou, Zhejiang 310052 (CN)**
- **ZHANG, Pu**
  **Hangzhou, Zhejiang 310052 (CN)**
- **WANG, Jin**
  **Hangzhou, Zhejiang 310052 (CN)**

(74) Representative: **Osha BWB**
  **2, rue de la Paix**
  **75002 Paris (FR)**

(54) **LINE-OF-SIGHT DIRECTION TRACKING METHOD AND APPARATUS**

(57)    The present invention discloses a line-of-sight direction tracking method and apparatus. The line-of-sight direction tracking method includes: providing corneal reflection for eyes of a user by using a plurality of light sources, and capturing images including a face of the user by using a plurality of cameras; determining light source reflection point coordinates and pupil center coordinates in a world coordinate system by means of a human eye feature set acquired from the images including the face, in combination with hardware calibration parameters; determining a line-of-sight optical axis according to the light source reflection point coordinates and the pupil center coordinates, and reconstructing, by the line-of-sight optical axis, a line-of-sight visual axis by means of a compensation angle; and determining a point of sight on a target object according to the line-of-sight visual axis and a position of the target object in the world coordinate system. According to the present invention, the technical problems of high hardware cost, low algorithm optimization efficiency and low estimation accuracy of line-of-sight tracking are solved.

```
providing corneal reflection for eyes of a user by using a plurality of
light sources, and capturing images including a face of the user by
using a plurality of cameras                                               S100

determining coordinates of a light source reflection point and
coordinates of a pupil center in a world coordinate system by means
of a human eye feature set acquired from the images including the
face, based on hardware calibration parameters                             S200

determining a line-of-sight optical axis according to the coordinates
of the light source reflection point and the coordinates of the pupil
center, and reconstructing, based on the line-of-sight optical axis, a
line-of-sight visual axis by means of a compensation angle                 S300

determining a point of sight on at least one target object according
to the line-of-sight visual axis and a position of the at least one
target object in the world coordinate system                               S400
```

FIG. 1

EP 4 383 193 A1

## Description

The present application claims the priority of Chinese Patent Application No. 202110897215.8 filed on August 5, 2021, the disclosure of which is hereby incorporated in its entirety as a part of the present application.

TECHNICAL FIELD

The present disclosure relates to the technical field of image processing, and in particular to a line-of-sight direction tracking method and apparatus.

BACKGROUND

In related art, real-time detection of a line-of-sight direction of a driver and a line-of-sight landing position can provide important information input for assisted driving and various product applications. For example, the angle and direction of a line of sight can be used to determine an observation area of a current driver and detect a dangerous driving behavior causing driver distraction, and the line-of-sight landing position can be used to determine an attention target of the current user, so as to adjust a display position of an augmented reality head-up display system.

In the prior art, the line-of-sight direction tracking method estimates the line-of-sight direction and a point of sight by analyzing features of the human eye through acquired images containing the human eye. This line-of-sight tracking method is usually divided into an appearance-based method and a corneal reflection-based method. The appearance-based method generally relies on appearance features contained in human eye images or face images, including the eyelid position, the pupil position, the iris position, the inner/outer corners of the eye, the face orientation, etc. to estimate a line-of-sight direction and a point of sight. The appearance-based method does not use geometric mapping, but allows human eye images to correspond to points in a high-dimensional space, and then learns a mapping relationship from points in a given feature space to screen coordinates. The corneal reflection-based method relies on Purkinje images formed by the reflection of a light source on the cornea in addition to some image features of the appearance-based method, and establishes the mapping from a pupil center of a geometric model to a gaze calibration point through eye movement features. In general, the corneal reflection method has higher accuracy than the appearance method, so that almost all mature commercial products are based on the corneal reflection method. However, the corneal reflection method also requires a complex device and an accurate calibration process, and is not universally applicable. No effective solution has been proposed at present to solve the problems of high hardware manufacturing cost, low algorithm optimization efficiency, and low line-of-sight estimation accuracy of the corneal reflection method.

SUMMARY

Embodiments of the present invention provide a line-of-sight direction tracking method and apparatus, which at least solve the technical problems of high hardware cost, low algorithm optimization efficiency, and low estimation accuracy of line-of-sight tracking.

According to one aspect of the embodiments of the present disclosure, a line-of-sight direction tracking method is provided, including: providing corneal reflection for an eye of a user by using a plurality of light sources, and capturing images including a face of the user by using a plurality of cameras; determining coordinates of a light source reflection point and coordinates of a pupil center in a world coordinate system by means of a human eye feature set acquired from the images including the face, based on hardware calibration parameters; determining a line-of-sight optical axis according to the coordinates of the light source reflection point and the coordinates of the pupil center, and reconstructing, based on the line-of-sight optical axis, a line-of-sight visual axis by means of a compensation angle; and determining a point of sight on a target object according to the line-of-sight visual axis and a position of the target object in the world coordinate system.

Optionally, the human eye feature set includes a light source imaging point and a pupil imaging point.

Optionally, the world coordinate system may be selected from any one of a light source coordinate system, a camera coordinate system, and a target object coordinate system.

Optionally, the method further includes performing simulation verification, analysis, and optimization through preset eyeball parameters, the compensation angle, the hardware calibration parameters, and a preset point of sight.

Optionally, the plurality of cameras, the plurality of light sources, and the target object face the user, and fields of view of the plurality of cameras do not include the plurality of light sources and the target object.

Optionally, the hardware calibration parameters include internal and external parameters of a plurality of camera coordinate systems and geometric position relationships, wherein the geometric position relationships include: a first position relationship between a plurality of light source coordinate systems and the plurality of camera coordinate systems, a second position relationship between the plurality of light source coordinate systems and a target object coordinate system, and a third position relationship between the plurality of camera coordinate systems and the target object coordinate system.

Optionally, the geometric position relationships are obtained based on the internal and external parameters of the plurality of cameras and by utilizing at least one of a plane mirror and an auxiliary camera to transmit calibration information for calibration.

Optionally, determining coordinates of a light source reflection point and coordinates of a pupil center in a world coordinate system by means of a face feature set acquired from the images including the face, based on hardware calibration parameters, includes: in a case where the world coordinate system is the light source coordinate system, determining, based on the face feature set, the coordinates of the light source reflection point and the coordinates of the pupil center in the light source coordinate system through the internal and external parameters of the plurality of cameras and based on the first position relationship, or based on the second position relationship and the third position relationship; in a case where the world coordinate system is the camera coordinate system, determining, based on the face feature set, the coordinates of the light source reflection point and the coordinates of the pupil center in the plurality of camera coordinate systems through the internal and external parameters of the plurality of cameras; and in a case where the world coordinate system is the target coordinate system, determining, based on the face feature set, the coordinates of the light source reflection point and the coordinates of the pupil center in the target object coordinate system through the internal and external parameters of the plurality of cameras and based on the third position relationship, or based on the first position relationship and the second position relationship.

Optionally, determining the line-of-sight optical axis according to the coordinates of the light source reflection point and the coordinates of the pupil center includes: determining coordinates of a corneal curvature center according to the coordinates of the light source reflection point and a corneal curvature radius; and determining, as the line-of-sight optical axis, a connecting line between the pupil center and the corneal curvature center according to the coordinates of the pupil center and the coordinates of the corneal curvature center.

Optionally, obtaining the geometric position relationships based on the internal and external parameters of the plurality of cameras and by utilizing a plane mirror and an auxiliary camera to transmit calibration information for calibration includes: acquiring, by a first auxiliary camera, a plurality of first marker images of the target object containing first markers reflected by the plane mirror in a plurality of different poses; calculating the third position relationship based on an orthogonal constraint according to the plurality of first marker images and based on the internal and external parameters of the plurality of cameras; acquiring, by a second auxiliary camera, second marker images containing the plurality of light sources, and acquiring the first position relationship based on the internal and external parameters of the plurality of cameras and based on the second marker images, wherein the second auxiliary camera is a stereo vision system; and determining the second position relationship according to the first position relationship and the third position relationship.

Optionally, obtaining the geometric position relationships based on the internal and external parameters of the plurality of cameras and by utilizing the auxiliary camera to transmit calibration information for calibration includes: acquiring, by a third auxiliary camera, third marker images containing the plurality of light sources, and acquiring the first position relationship based on the internal and external parameters of the plurality of cameras and based on the third marker images, wherein the third auxiliary camera is a stereo vision system; configuring a fourth auxiliary camera to have a field of view including the plurality of cameras and the third auxiliary camera, disposing a calibration plate beside the third auxiliary camera, acquiring, by the plurality of cameras, fourth marker images containing a region of the calibration plate, and acquiring, by the third auxiliary camera, fifth marker images of the target object containing fifth markers; by taking the position relationship between the fourth auxiliary camera and the plurality of cameras as a pose conversion bridge, determining the third position relationship according to the fourth marker images and the fifth marker images and based on internal and external parameters of the third auxiliary camera and the internal and external parameters of the plurality of cameras; and determining the second position relationship according to the first position relationship and the third position relationship.

Optionally, obtaining the geometric position relationships based on the internal and external parameters of the plurality of cameras and by utilizing the plane mirror to transmit calibration information for calibration includes: with the plane mirror having no less than 4 markers pasted thereon as an aid, acquiring, by the plurality of cameras, reflected images containing the plurality of light sources, the target object, and the markers; calculating marker coordinates of the respective markers, mirrored light source coordinates of the plurality of light sources, and mirrored target object coordinates of the target object in the plurality of camera coordinate systems according to the reflected images; reconstructing a mirror plane according to all the marker coordinates, and determining the first position relationship and the third position relationship based on the mirrored light source coordinates and the mirrored target object coordinates according to a principle of specular reflection; and determining the second position relationship according to the first position relationship and the third position relationship.

Optionally, before reconstructing, based on the line-of-sight optical axis, the line-of-sight visual axis by means of the compensation angle, the method further includes: acquiring a set of sample images when the user gazes at each preset gaze point; determining first compensation angle samples according to sample features extracted from each set of sample images; and traversing all the first compensation angle samples and acquiring the compensation angle through screening and purification.

Optionally, determining first compensation angle samples according to sample features extracted from each set of sample images includes: extracting sample features for each set of sample images, and reconstructing a first line-of-sight optical axis according to the sample features; deriving a first line-of-sight visual axis based on real coordinates of the preset gaze point; and acquiring the first compensation angle samples according to the first line-of-sight optical axis and the first line-of-sight visual axis.

Optionally, traversing all the first compensation angle samples and acquiring the compensation angle through screening and purification includes: finding a center point of all the first compensation angle samples, and screening and removing the samples that are not within a first threshold range; and continuing to traverse, screen, and purify all the remaining samples until a difference between a current center point and a previous center point is lower than a second threshold, and acquiring the compensation angle from all the purified samples.

Optionally, before reconstructing, based on the line-of-sight optical axis, the line-of-sight visual axis by means of the compensation angle, the method further includes: determining a deviation between a predicted line-of-sight observation point and a real line-of-sight observation point through a dynamic compensation model for the acquired data, and acquiring the compensation angle according to the deviation.

Optionally, initializing the dynamic compensation model before the dynamic compensation model is used includes: acquiring a set of initial sample images when the user gazes at each preset initial point; and extracting initial sample features for each set of initial sample images, and obtaining the dynamic compensation model that fits the current user through few-shot learning initialization according to the initial sample features.

Optionally, training the dynamic compensation model includes: acquiring a plurality of sets of sample data when a plurality of users gaze at preset calibration points respectively; cleaning the plurality of sets of sample data and extracting training sample features from the cleaned plurality of sets of samples; and training an initial dynamic compensation model by using few-shot learning according to the training sample features to acquire the trained dynamic compensation model.

Optionally, performing simulation verification, analysis, and optimization through preset eyeball parameters, the compensation angle, the hardware calibration parameters, and a preset point of sight includes: performing, for the preset point of sight, simulation according to the preset eyeball parameters, the compensation angle, and the hardware calibration parameters to calculate a reconstructed light source imaging point and a reconstructed pupil imaging point; determining a predicted point of sight according to the line-of-sight direction tracking method based on the reconstructed light source imaging point and the reconstructed pupil imaging point; and performing statistical analysis according to comparison values of the preset point of sight and the predicted point of sight and carrying out verification and optimization according to an analysis result.

Optionally, performing, for the preset point of sight, simulation according to the preset eyeball parameters, the compensation angle, and the hardware calibration parameters to calculate a reconstructed light source imaging point and a reconstructed pupil imaging point includes: determining a light source-cornea-camera angle according to a corneal center in the preset eyeball parameters and the hardware calibration parameters, determining coordinates of a reconstructed light source reflection point based on the light source-cornea-camera angle and a corneal curvature radius in the preset eyeball parameters and based on a principle of spherical reflection, and calculating the reconstructed light source imaging point according to the coordinates of the reconstructed light source reflection point and based on the hardware calibration parameters; and determining a first visual axis according to coordinates of the preset point of sight and the corneal center in the preset eyeball parameters, deriving a first optical axis based on the first visual axis and the compensation angle, determining coordinates of a reconstructed pupil center according to the first optical axis and based on a distance between the pupil center and the corneal center of the preset eyeball parameters, and calculating the reconstructed pupil imaging point according to the coordinates of the pupil center and based on the hardware calibration parameters.

Optionally, the preset point of sight may be preset in advance or randomly generated at a plurality of different positions to simulate tracking of various line-of-sight angles.

Optionally, performing statistical analysis according to the preset point of sight and the predicted point of sight and carrying out verification and optimization according to an analysis result includes: verifying whether implementation of the line-of-sight direction tracking method is correct, testing an influence of an added disturbance on a point-of-sight error, and determining a configuration method of the plurality of light sources, the plurality of cameras, and the target object.

According to another aspect of the embodiments of the present disclosure, a line-of-sight direction tracking apparatus is also provided, including: an acquisition module configured to provide corneal reflection for an eye of a user by using a plurality of light sources, and capture images including a face of the user by using a plurality of cameras; a key point determination module configured to determine coordinates of a light source reflection point and coordinates of a pupil center in a world coordinate system by means of a human eye feature set acquired from the images including the face, based on hardware calibration parameters; a line-of-sight reconstruction module configured to determine a line-of-sight optical axis according to the coordinates of the light source reflection point and the coordinates of the pupil center, and reconstruct, based on the line-of-sight optical axis, a line-of-sight visual axis by means of a compensation angle; and a point-of-sight determination module configured to determine a point of sight on a target object according to the line-of-sight visual axis and a position of the target object in the world coordinate system.

Optionally, the apparatus further includes a simulation module configured to perform simulation verification, analysis, and optimization through preset eyeball parameters, the compensation angle, the hardware calibration parameters, and a preset point of sight.

Optionally, the hardware calibration parameters include internal and external parameters of a plurality of camera coordinate systems and geometric position relationships, wherein the geometric position relationships include: a first position relationship between a plurality of light source coordinate systems and the plurality of camera coordinate systems, a second position relationship between the plurality of light source coordinate systems and a target object coordinate system, and a third position relationship between the plurality of camera coordinate systems and the target object coordinate system.

Optionally, the key point determination module includes a calibration unit configured to obtain the geometric position relationships based on the internal and external parameters of the plurality of cameras and by utilizing at least one of a plane mirror and an auxiliary camera to transmit calibration information for calibration.

Optionally, the key point determination module includes: a first determination unit configured to, in a case where the world coordinate system is the light source coordinate system, determine, based on the face feature set, the coordinates of the light source reflection point and the coordinates of the pupil center in the light source coordinate system through the internal and external parameters of the plurality of cameras and based on the first position relationship, or based on the second position relationship and the third position relationship; a second determination unit configured to, in a case where the world coordinate system is the camera coordinate system, determine, based on the face feature set, the coordinates of the light source reflection point and the coordinates of the pupil center in the plurality of camera coordinate systems through the internal and external parameters of the plurality of cameras; and a third determination unit configured to, in a case where the world coordinate system is the target coordinate system, determine, based on the face feature set, the coordinates of the light source reflection point and the coordinates of the pupil center in the target object coordinate system through the internal and external parameters of the plurality of cameras and based on the third position relationship, or based on the first position relationship with the second position relationship.

Optionally, the line-of-sight reconstruction module includes: a first reconstruction unit configured to determine coordinates of a corneal curvature center according to the coordinates of the light source reflection point and a corneal curvature radius; and a second reconstruction unit configured to determine, as the line-of-sight optical axis, a connecting line between the pupil center and the corneal curvature center according to the coordinates of the pupil center and the coordinates of the corneal curvature center.

Optionally, the calibration unit includes a first calibration unit configured to obtain the geometric position relationships based on the internal and external parameters of the plurality of cameras and by utilizing the plane mirror and the auxiliary camera to transmit calibration information for calibration, wherein the first calibration unit includes: a first calibration subunit configured to acquire, by a first auxiliary camera, a plurality of first marker images of the target object containing first markers reflected by the plane mirror in a plurality of different poses; a second calibration subunit configured to calculate the third position relationship based on an orthogonal constraint according to the plurality of first marker images and based on the internal and external parameters of the plurality of cameras; a third calibration subunit configured to acquire, by a second auxiliary camera, second marker images containing the plurality of light sources, and acquire the first position relationship based on the internal and external parameters of the plurality of cameras and based on the second marker images, wherein the second auxiliary camera is a stereo vision system; and a fourth calibration subunit configured to determine the second position relationship according to the first position relationship and the third position relationship.

Optionally, the calibration unit includes a second calibration unit configured to obtain the geometric position relationships based on the internal and external parameters of the plurality of cameras and by utilizing the auxiliary camera to transmit calibration information for calibration, wherein the second calibration unit includes: a fifth calibration subunit configured to acquire, by a third auxiliary camera, third marker images containing the plurality of light sources, and acquire the first position relationship based on the internal and external parameters of the plurality of cameras and based on the third marker images, wherein the third auxiliary camera is a stereo vision system; a sixth calibration subunit configured to configure a fourth auxiliary camera to have a field of view including the plurality of cameras and the third auxiliary camera, dispose a calibration plate beside the third auxiliary camera, acquire, by the plurality of cameras, fourth marker images containing a region of the calibration plate, and acquire, by the third auxiliary camera, fifth marker images of the target object containing fifth markers; a seventh calibration subunit configured to, by taking the position relationship between the fourth auxiliary camera and the plurality of cameras as a pose conversion bridge, determine the third position relationship according to the fourth marker images and the fifth marker images and based on internal and external parameters of the third auxiliary camera and the internal and external parameters of the plurality of cameras; and an eighth calibration subunit configured to determine the second position relationship according to the first position relationship and the third position relationship.

Optionally, the calibration unit includes a third calibration unit configured to obtain the geometric position relationships based on the internal and external parameters of the plurality of cameras and by utilizing the plane mirror to transmit calibration information for calibration, wherein the third calibration unit includes: a ninth calibration subunit configured to, with the plane mirror having no less than 4 markers pasted thereon as an aid, acquire, by the plurality of cameras, reflected images containing the plurality of light sources, the target object, and the markers; a tenth calibration subunit configured to calculate marker coordinates of the respective markers, mirrored light source coordinates of the plurality of light sources, and mirrored target object coordinates of the target object in the plurality of camera coordinate systems according to the reflected images; an eleventh calibration subunit configured to reconstruct a mirror plane according to all the marker coordinates, and determine the first position relationship and the third position relationship based on the mirrored light source coordinates and the mirrored target object coordinates according to a principle of specular reflection; and a twelfth calibration subunit configured to determine the second position relationship according to the first position relationship and the third position relationship.

Optionally, the line-of-sight reconstruction module includes: a third reconstruction unit configured to acquire a set of sample images when the user gazes at each preset gaze point; a fourth reconstruction unit configured to determine first compensation angle samples according to sample features extracted from each set of sample images; and a fifth reconstruction unit configured to traverse all the first compensation angle samples and acquire the compensation angle through screening and purification.

Optionally, the line-of-sight reconstruction module further includes a dynamic compensation unit configured to determine a deviation between a predicted line-of-sight observation point and a real line-of-sight observation point through a dynamic compensation model for the acquired data, and acquire the compensation angle according to the deviation.

Optionally, the dynamic compensation unit includes an initialization subunit configured to initialize the dynamic compensation model before the dynamic compensation model is used, wherein the initialization subunit includes: a first initialization subunit configured to acquire a set of initial sample images when the user gazes at each preset initial point; and a second initialization subunit configured to extract initial sample features for each set of initial sample images and obtain the dynamic compensation model that fits the current user through few-shot learning initialization according to the initial sample features.

Optionally, the dynamic compensation unit includes a training subunit configured to train the dynamic compensation model, wherein the training subunit includes: a first training subunit configured to acquire a plurality of sets of sample data when a plurality of users gaze at preset calibration points respectively; a second training subunit configured to clean the plurality of sets of sample data and extract training sample features from the cleaned plurality of sets of samples; and a third training subunit configured to train an initial dynamic compensation model by using few-shot learning according to the training sample features to acquire the trained dynamic compensation model.

Optionally, the simulation module includes a first simulation unit configured to perform, for the preset point of sight, simulation according to the preset eyeball parameters, the compensation angle, and the hardware calibration parameters to calculate a reconstructed light source imaging point and a reconstructed pupil imaging point; a second simulation unit configured to determine a predicted point of sight according to the line-of-sight direction tracking method based on the reconstructed light source imaging point and the reconstructed pupil imaging point; and a third simulation unit configured to perform statistical analysis according to comparison values of the preset point of sight and the predicted point of sight and carry out verification and optimization according to an analysis result.

Optionally, the first simulation unit includes: a first simulation subunit configured to determine a light source-cornea-camera angle according to a corneal center in the preset eyeball parameters and the hardware calibration parameters, determine coordinates of a reconstructed light source reflection point based on the light source-cornea-camera angle and a corneal curvature radius in the preset eyeball parameters and based on a principle of spherical reflection, and calculate the reconstructed light source imaging point according to the coordinates of the reconstructed light source reflection point and based on the hardware calibration parameters; and a second simulation subunit configured to determine a first visual axis according to coordinates of the preset point of sight and the corneal center in the preset eyeball parameters, derive a first optical axis based on the first visual axis and the compensation angle, determine coordinates of a reconstructed pupil center according to the first optical axis and based on a distance between the pupil center and the corneal center of the preset eyeball parameters, and calculate the reconstructed pupil imaging point according to the coordinates of the pupil center and based on the hardware calibration parameters.

Optionally, the third simulation unit includes a third simulation subunit configured to verify whether implementation of the line-of-sight direction tracking method is correct, test an influence of an added disturbance on a point-of-sight error, and determine a configuration method of the plurality of light sources, the plurality of cameras, and the target object.

According to another aspect of the embodiments of the present disclosure, a storage medium is also provided, including a stored program, wherein the program, when running, controls a device where the storage medium is located to execute the line-of-sight direction tracking method according to any one of claims 1 to 22.

According to another aspect of the embodiments of the present disclosure, an electronic device is also provided, including a processor and a memory configured to store executable instructions for the processor, wherein the processor is configured to execute the line-of-sight direction tracking method of any one of claims 1 to 22 by executing the executable instructions.

In the embodiments of the present disclosure, the following steps are performed: providing corneal reflection for an eye of a user by using a plurality of light sources, and capturing images including a face of the user by using a plurality of cameras; determining the coordinates of a light source reflection point and the coordinates of a pupil center in a world coordinate system by means of a human eye feature set acquired from the images including the face, based on hardware calibration parameters; determining a line-of-sight optical axis according to the coordinates of the light source reflection point and the coordinates of the pupil center, and reconstructing, based on the line-of-sight optical axis, a line-of-sight visual axis by means of a compensation angle; and determining a point of sight on a target object according to the line-of-sight visual axis and a position of the target object in the world coordinate system. In the embodiments of the present disclosure, the technical problems of high hardware cost, low algorithm optimization efficiency, and low estimation accuracy of line-of-sight tracking are solved.

BRIEF DESCRIPTION OF DRAWINGS

The accompanying drawings described here are used to provide a further understanding of the present disclosure and constitute a part of the present application. The illustrative embodiments of the present disclosure and their descriptions are used to explain the present disclosure and do not constitute an undue limitation of the present disclosure. In the drawings:

FIG. 1 is a flowchart of an optional line-of-sight direction tracking method according to an embodiment of the present disclosure;

FIG. 2 is a diagram of an application scenario of an optional line-of-sight tracking method according to an embodiment of the present disclosure;

FIG. 3 is a schematic diagram of settings of an optional line-of-sight tracking system according to an embodiment of the present disclosure;

FIG. 4 is a diagram of an optional calibration scenario according to an embodiment of the present disclosure;

FIG. 5 is a flowchart of an optional calibration method according to an embodiment of the present disclosure;

FIG. 6 is a diagram of another optional calibration scenario according to an embodiment of the present disclosure;

FIG. 7 is a flowchart of another optional calibration method according to an embodiment of the present disclosure;

FIG. 8 is a diagram of another optional calibration scenario according to an embodiment of the present disclosure;

FIG. 9 is a flowchart of another optional calibration method according to an embodiment of the present disclosure;

FIG. 10 is a schematic diagram of an optional method for reconstructing a light source reflection point according to an embodiment of the present disclosure;

FIG. 11 is a structural block diagram of an optional line-of-sight direction tracking apparatus according to an embodiment of the present disclosure;

FIG. 12 is a structural block diagram of another optional line-of-sight direction tracking apparatus according to an embodiment of the present disclosure.

DETAILED DESCRIPTION

In order for those skilled in the art to better understand solutions of the present disclosure, the technical solutions in the embodiments of the present disclosure will be described clearly and completely with reference to the attached drawings. Obviously, the described embodiments are merely some rather than all of the embodiments of the present disclosure. Based on the embodiments in the present disclosure, all other embodiments obtained by those of ordinary skill in the art without creative effort fall within the scope of protection of the present disclosure.

It should be noted that the terms "first", "second", and so on in the description and claims of the present disclosure and the above drawings are intended to distinguish between similar objects and are not necessarily used to describe a specific order or sequence. It should be understood that such used data is interchangeable where appropriate so that the embodiments of the present disclosure described herein can be implemented in an order other than those illustrated or described herein. In addition, the terms "include", "have", and any other variants thereof mean to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

According to an embodiment of the present disclosure, an embodiment of a line-of-sight direction tracking method is provided. It should be noted that the steps shown in the flowchart of the accompanying drawings may be executed in computer systems such as a set of computer-executable instructions, and although a logical order is shown in the flowchart, in some cases, the steps shown or described may be executed in an order different therefrom.

Embodiments of the present disclosure provide a line-of-sight direction tracking method, which can be applied to a variety of application scenarios, including a transparent A column, a line-of-sight bright screen, a head-up display system, and other application products. Embodiments of the present disclosure provide a line-of-sight direction tracking method which is low in hardware cost, high in processing accuracy, and high in processing speed and can be used in real time and be applied to most practical application scenarios.

The present disclosure will be explained by detailed embodiments.

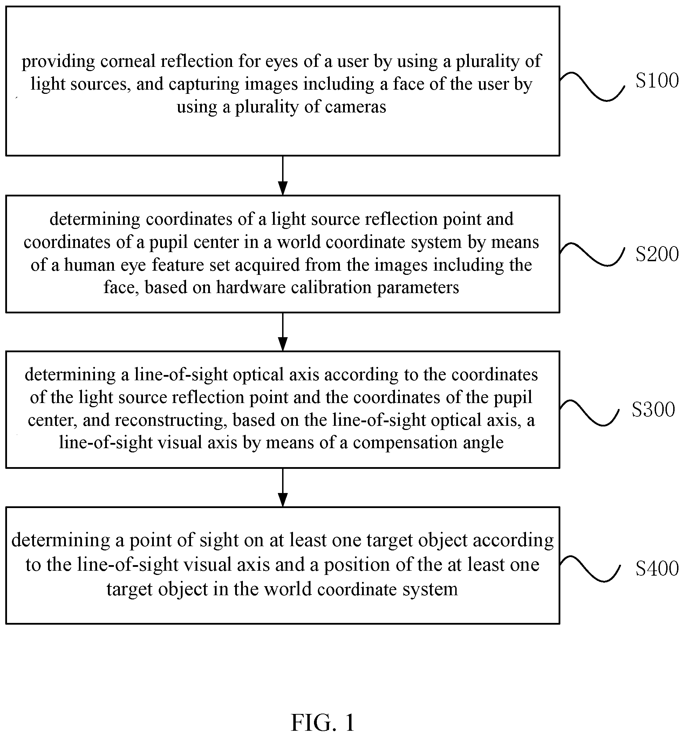

According to an aspect of the present disclosure, a line-of-sight direction tracking method is provided. With reference to FIG. 1, it is a flowchart of an optional line-of-sight direction tracking method according to an embodiment of the present disclosure. As shown in FIG. 1, the method includes the following steps:

S 100: providing corneal reflection for an eye of a user by using a plurality of light sources, and capturing images including a face of the user by using a plurality of cameras;

S200: determining coordinates of a light source reflection point and coordinates of a pupil center in a world coordinate system by means of a human eye feature set acquired from the images including the face, based on hardware calibration parameters;

S300: determining a line-of-sight optical axis according to the coordinates of the light source reflection point and the coordinates of the pupil center, and reconstructing, based on the line-of-sight optical axis, a line-of-sight visual axis by means of a compensation angle; and

S400: determining a point of sight on a target object according to the line-of-sight visual axis and a position of the target object in the world coordinate system.

In embodiments of the present disclosure, the following steps are included: providing corneal reflection for an eye of a user by using a plurality of light sources, and capturing images including a face of the user by using a plurality of cameras; determining coordinates of a light source reflection point and coordinates of a pupil center in a world coordinate system by means of a human eye feature set acquired from the images including the face, based on hardware calibration parameters; determining a line-of-sight optical axis according to the coordinates of the light source reflection point and the coordinates of the pupil center, and reconstructing, based on the line-of-sight optical axis, a line-of-sight visual axis by means of a compensation angle; determining a line-of-sight optical axis according to the human eye feature set and a geometric position relationship and reconstructing, based on the line-of-sight optical axis, a line-of-sight visual axis by means of a compensation angle; and determining a point-of-sight target object on a target object according to the line-of-sight visual axis and a position of the target object in the world coordinate system. Through the above steps, the technical problems of high hardware cost, low algorithm optimization efficiency, and low estimation accuracy of line-of-sight tracking are solved.

Next, detail description will be given with reference to the above implementation steps.

S100: providing corneal reflection for an eye of a user by using a plurality of light sources, and capturing images including a face of the user by using a plurality of cameras;

Specifically, the user gazes at the target object. A plurality of light sources are used to emit infrared light to the eye of the user, and a plurality of cameras may be used to capture images containing a pupil imaging point and positions of light source reflection points where the infrared light is reflected by the cornea in real time. The plurality of cameras may be used to capture images of the face of the user when the user gazes at a scenario in real time. The images of the face of the user do not mean images that only include a face region of the user, but the captured images include the face region of the user. In order to improve the accuracy of subsequent feature detection and feature extraction, when the plurality of cameras capture the images of the face of the user, they can focus on acquiring the face region of the user to obtain face images with clear facial features. The target that the user gazes at may be a display device, a screen for outputting image content and text content, such as a screen, a display, and a head-mounted display, or may be a non-display device, such as a windshield.

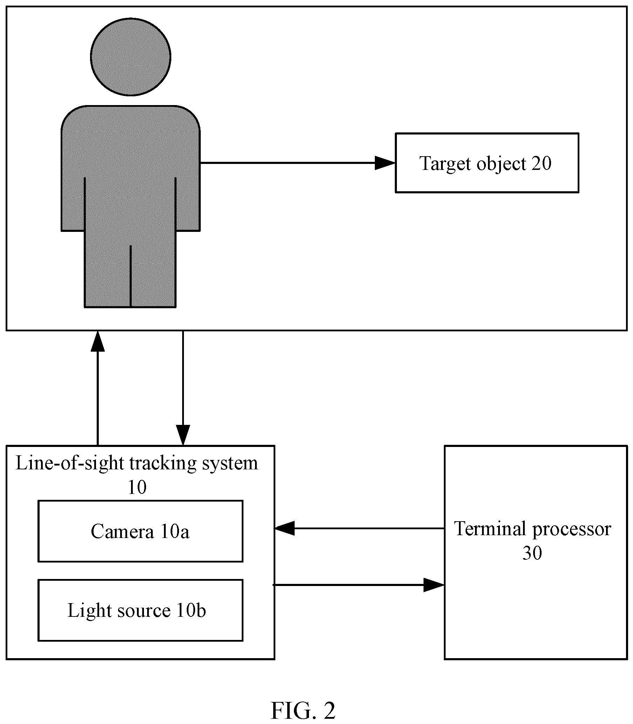

FIG. 2 is a diagram of an application scenario of an optional line-of-sight tracking method according to an embodiment of the present disclosure. As shown in FIG. 2, the application scenario of the line-of-sight tracking method includes a line-of-sight tracking system 10 and a terminal processor 30 that communicate through a network, wherein the line-of-sight tracking system 10 includes a camera 10a and a light source 10b. When a user gazes at a target object 20, the light source 10b generates infrared light emitted to the eye of the user, and the camera 10a captures an image containing the eye of the user, which eye image includes a pupil imaging point and a light source imaging point. The target object 20 may be a display device, a screen for outputting image content and text content, such as a screen, a display, and a head-mounted display, or may be a non-display device, for example, a windshield.

According to the prior art, when parameters of an eyeball model are unknown, two cameras and two light sources form a smallest system for finding a corneal center and also a smallest system for implementing line-of-sight tracking; and when the parameters of the eyeball model are known, one camera and two light sources form a smallest system for finding a corneal center and also a smallest system for implementing line-of-sight tracking. The present disclosure is suitable for different users, and the parameters of the eyeball models of different users are unknown and different. Thus, a plurality of cameras 10a include at least two cameras, a plurality of light sources 10b include at least two light sources, and the application scenario includes a target object.

In an optional embodiment, the plurality of cameras, the plurality of light sources, and the target object face the user, and fields of view of the plurality of cameras do not include the plurality of light sources and the target object. In an actual line-of-sight tracking system, the plurality of light sources, the plurality of cameras, and the target object are configured on a same side, wherein the present disclosure does not limit specific numbers of the cameras, the light sources, and the target object, and specific arrangements and positions of the devices. A position relationship between any two of the plurality of light sources, the plurality of cameras, and the target object in the line-of-sight tracking system may be preset or obtained based on calibration.

The terminal processor 30 acquires images containing a face, performs detection and feature extraction on the images containing the face, and obtains a human eye feature set, including to determine coordinates of a pupil imaging point and coordinates of a light source imaging point in the eye images in a three-dimensional coordinate system of the target object 20. The terminal processor 30 determines a line-of-sight optical axis according to the inputted human eye feature set, reconstructs a line-of-sight visual axis by means of a compensation angle, and finally determines a point of sight of the user according to the line-of-sight visual axis and a geometric position relationship. The terminal processor 30 may be a fixed terminal or a mobile terminal, and the mobile terminal may include at least one of the following devices, such as a notebook, a tablet computer, a mobile phone, a vehicle-mounted device, and the like.

S200: determining coordinates of a light source reflection point and coordinates of a pupil center in a world coordinate system by means of a human eye feature set acquired from the images including the face, based on hardware calibration parameters;

Detection and feature extraction are performed on the images containing the face to obtain a human eye feature set. In an optional embodiment, the human eye feature set includes a light source imaging point and a pupil imaging point. In this embodiment, the detection and feature extraction on the images containing the face are implemented using the prior art. The present application is not limited to specific techniques for obtaining the human eye feature set, and a traditional image processing method and an image processing method based on deep learning may be used.

In an optional embodiment, the hardware calibration parameters include internal and external parameters of a plurality of camera coordinate systems and geometric position relationships, wherein the geometric position relationships include: a first position relationship between a plurality of light source coordinate systems and the plurality of camera coordinate systems, a second position relationship between the plurality of light source coordinate systems and a target object coordinate system, and a third position relationship between the plurality of camera coordinate systems and the target object coordinate system. And, when any two position relationships of the geometric position relationships are acquired, the remaining one position relationship may be determined through spatial transformation relationship and the known two position relationships. Through the hardware calibration parameters, a mapping relationship between any pixel coordinates and the world coordinate system, and a mapping relationship between a coordinate system where any hardware is located and the world coordinate system may be obtained.

In a method for determining the line-of-sight optical axis based on corneal pupil reflection, the determination of coordinates of the light source reflection point and coordinates of the pupil center in the world coordinate system according to the human eye feature set needs to be based on positions of the plurality of cameras and the plurality of light sources in the same world coordinate system, and the positions of the plurality of light sources and the plurality of cameras in the world coordinate system may be determined respectively according to the mapping relationship contained in the hardware calibration parameters.

In addition, a light source reflection point is a point of reflection on a corneal surface of light emitted from the center of a light source. A light source imaging point is the imaging of a light source reflection point in an acquired image containing a face of a user. A pupil center is a center point of a pupil region. A pupil imaging point is the imaging of a pupil refraction point of a pupil center being refracted by a cornea in an acquired image containing a face of a user. The cornea of the eye is modeled as a sphere. A corneal curvature center is a sphere center of the sphere. A cornea radius is a distance from the corneal curvature center to a surface of the corneal sphere. An optical axis direction is a direction of a connecting line between the pupil center and the corneal curvature center. Similarly, a human eyeball may also be modeled as an eyeball center, which is a sphere center of the eyeball, and the eyeball center is also located on the optical axis. According to optical principles, a corneal curvature radius may be acquired based on a position of a light source and a light source imaging point.

The light source imaging point is the imaging of the light source reflection point in the acquired image containing the face of the user. According to camera imaging principles, the coordinates of the light source reflection point in the world coordinate system are determined based on the position coordinates and internal and external parameters of the plurality of cameras that acquire the images. It should be noted that the number of light sources may be one or plural. When a plurality of light sources are working, each light source contains a corresponding light source reflection point, and a method for determining coordinates of each light source in the world coordinate system is consistent with the method above. Similarly, the pupil imaging point is the imaging of the pupil refraction point of the pupil center being refracted by the cornea in the acquired image containing the face of the user. According to camera imaging principles, coordinates of the pupil center in the world coordinate system are determined based on the position coordinates and internal and external parameters of the camera that acquires the image.

In an optional embodiment, the world coordinate system may be selected from any one of a light source coordinate system, a camera coordinate system, and a target object coordinate system. That is, the world coordinate system may be a stereo coordinate system of any specified light source, camera, or target object.

It can be seen from the above that through the hardware calibration parameters, a mapping relationship between any pixel coordinates and the world coordinate system, and a mapping relationship between a coordinate system where any hardware is located and the world coordinate system may be obtained. The face feature set is two-dimensional information in a pixel coordinate system. Through the mapping relationship between any pixel coordinates and the world coordinate system, the light source reflection point coordinates and the pupil center coordinates in the world coordinate system may be obtained, and there are the following situations depending on the specified world coordinate system.

In an optional embodiment, determining coordinates of a light source reflection point and coordinates of a pupil center in a world coordinate system by means of a face feature set acquired from the images including the face, based on hardware calibration parameters, includes:

in a case where the world coordinate system is the light source coordinate system, determining, based on the face feature set, the coordinates of the light source reflection point and the coordinates of the pupil center in the light source coordinate system through the internal and external parameters of the plurality of cameras and based on the first position relationship, or based on the second position relationship and the third position relationship;

in a case where the world coordinate system is the camera coordinate system, determining, based on the face feature set, the coordinates of the light source reflection point and the coordinates of the pupil center in the plurality of camera coordinate systems through the internal and external parameters of the plurality of cameras; and

in a case where the world coordinate system is the target coordinate system, determining, based on the face feature set, the coordinates of the light source reflection point and the coordinates of the pupil center in the target object coordinate system through the internal and external parameters of the plurality of cameras and based on the third position relationship, or based on the first position relationship and the second position relationship.

Further, the present application does not limit the method for determining the internal and external parameters of the plurality of cameras. The internal and external parameters of the plurality of cameras may be acquired through preset factory parameters or through calibration. The present application also does not limit the method for calibrating the internal and external parameters of the plurality of cameras. For example, the internal and external parameters of the plurality of cameras are calibrated by using a calibration plate.

In an optional embodiment, the geometric position relationships are obtained based on the internal and external parameters of the plurality of cameras and by utilizing at least one of a plane mirror and an auxiliary camera to transmit calibration information for calibration.

Since the fields of view of the plurality of cameras do not include the plurality of light sources and the target object, at least one of the plane mirror and the auxiliary camera is used to transmit the calibration information, and the geometric position relationships are found based on the calibration information.

Specifically, a calibration process aims to obtain the geometric position relationships among the plurality of cameras, the plurality of light sources, and the target object. However, in this embodiment, due to the limitation of reflected light paths and that the plurality of light sources, the plurality of cameras, and the target object included in the line-of-sight tracking system are configured on the same side, the cameras cannot directly observe the target object or can only observe a part of the target object. According to the present application, the geometric position relationships are obtained based on the internal and external parameters of the plurality of cameras and by utilizing at least one of a plane mirror and an auxiliary camera to transmit calibration information for calibration.

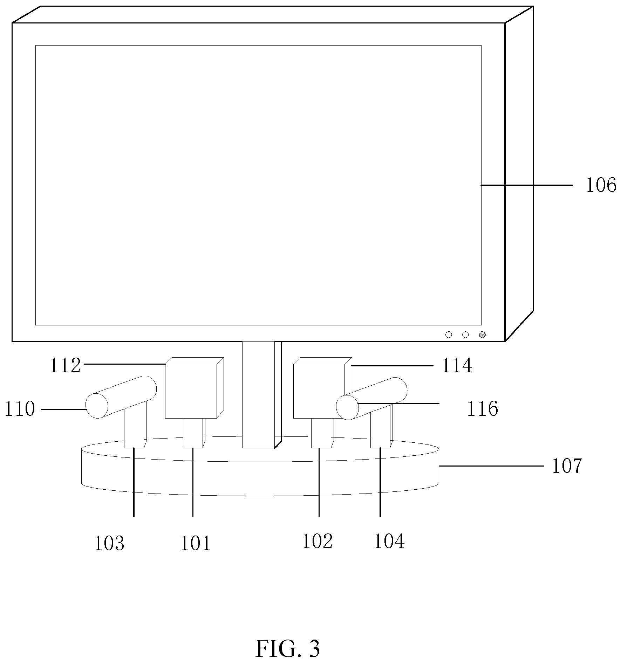

FIG. 3 is a schematic diagram of settings of an optional line-of-sight tracking system according to an embodiment of the present disclosure, with the line-of-sight tracking system being configured with two cameras on an outer side and two light sources on an inner side. As shown in FIG. 3, the line-of-sight tracking system 100 includes cameras 110 and 116 and light sources 112 and 114. The light sources are configured to emit light to an eye of the user 105 to provide corneal reflection. The cameras are used for capturing images containing the face of the user 105. The line-of-sight tracking system 100 adopts an arrangement in which the light sources are at an inner side and the cameras are at an outer side. The present disclosure does not limit the specific arrangement of the cameras and the light sources. For example, an arrangement in which the cameras are at the inner side and the light sources are at the outer side or an arrangement in which the cameras and the light sources are alternately disposed may also be adopted. The cameras and the light sources are fixed to gimbals 103, 104, 101, and 102, respectively, and the gimbals may adjust the respective components in horizontal and vertical directions. The fixed components are mounted on a base 107, and the distance between the components may be adjusted by adjusting their fixed positions. In this embodiment, the target object is configured as a display 106, which may be used to display calibration markers.

In exemplary embodiments of the present application, three feasible calibration methods are provided, and the calibration methods are explained by taking the line-of-sight tracking system shown in FIG. 3 as an example.

First calibration method:

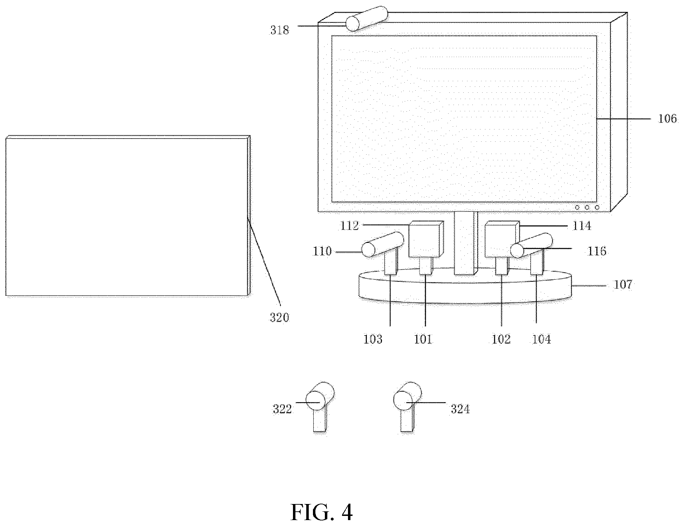

FIG. 4 is a diagram of an optional calibration scenario according to an embodiment of the present disclosure. As shown in FIG. 4, a plane mirror 320 is placed on a front side of the display 106. A first auxiliary camera 318 is fixed above the display 106. A second auxiliary camera is arranged in front of the line-of-sight tracking system. The second auxiliary camera is a stereo vision system that includes cameras 322 and 324. The display 106 displays first markers. The auxiliary camera 318 acquires an image of all the first markers projected by the display 106 in the plane mirror 320. A field of view of the stereo vision system includes all cameras and light sources.

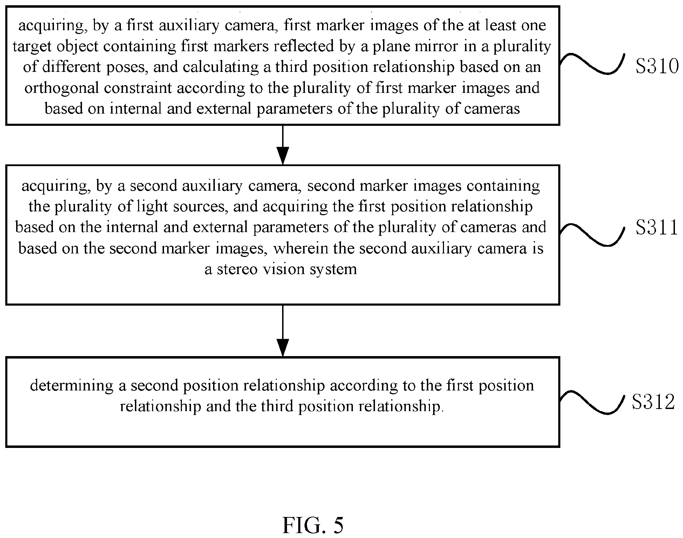

FIG. 5 is a flowchart of an optional calibration method according to an embodiment of the present disclosure. As shown in FIG. 5, in an optional embodiment, obtaining the geometric position relationships based on the internal and external parameters of the plurality of cameras and by utilizing the plane mirror and the auxiliary camera to transmit calibration information may include:

S310: acquiring, by a first auxiliary camera, a plurality of first marker images of the target object containing first markers reflected by the plane mirror in a plurality of different poses;

Specifically, the plane mirror 320 reflects in the plurality of different poses, so that a virtual image of the first markers in a mirror surface is in the field of view of the auxiliary camera 318, wherein a number of the plurality of poses of the plane mirror is at least three, and the planes where the plane mirror is located in different poses are not parallel to each other.

S311: calculating the third position relationship based on an orthogonal constraint according to the plurality of first marker images and based on the internal and external parameters of the plurality of cameras;

Specifically, the internal and external parameters of the plurality of cameras include internal and external parameters of the cameras, the first auxiliary camera, and the second auxiliary camera. In this embodiment, the calibration of the plurality of cameras is implemented by using the prior art, and the specific techniques of calibrating the internal and external parameters of the plurality of cameras are not limited.

According to the plurality of first marker images, relative positions of all the first markers relative to the auxiliary camera are restored based on the principle of specular reflection of the plane mirror. The plane mirror with different poses is used to reflect images of the markers, that is, to provide different first auxiliary camera coordinate systems for the fixed display. P3P is used on all the first marker images to find a plurality of candidate mirrored first marker combinations. A final combination is selected after screening based on the orthogonal constraint of mirrored points. The orthogonal constraint means that in the auxiliary camera coordinate system, an axial vector for any two different mirror surfaces are orthogonal to a difference vector between projection coordinates of the same marker under the respective mirror surfaces. The relative positions of all the first markers relative to the auxiliary camera are recovered according to the final combination. Further, based on results of the internal and external parameters of the plurality of cameras obtained by the above calibration, a position relationship between the plurality of cameras and the display, that is, the third position relationship, is calculated.

S312: acquiring, by a second auxiliary camera, second marker images containing the plurality of light sources, and acquiring the first position relationship based on the internal and external parameters of the plurality of cameras and based on the second marker images, wherein the second auxiliary camera is a stereo vision system;

The second auxiliary camera is a stereo vision system, and a field of view of the stereo vision system includes all the cameras and light sources. Second marker images including all the light sources are acquired and processed by the stereo vision system. Since the data acquired by the stereo vision system includes three-dimensional information, poses of the light sources in the stereo vision system are determined according to the second marker images. Further, the position relationship between the plurality of light sources and the plurality of cameras, that is, the first position relationship, is determined based on the internal and external parameters of the plurality of cameras.

S313: determining the second position relationship according to the first position relationship and the third position relationship.

Calibration results with high accuracy and robustness can be obtained through the above steps. Based on reflective imaging of the target object by the plane mirror, a system pose relationship is determined based on an orthogonal constraint according to the established pose relationship between the target object and a virtual image of the target object in the plane mirror. Since a position of the plane mirror needs to be changed multiple times, the camera needs to acquire multiple images reflected by the mirror surface, and the movement of the mirror needs to meet preset conditions. Thus, the operations are complicated and inefficient. In addition, the linear solution based on the orthogonal constraint in the mirror surface calibration method is usually sensitive to noise, and the accuracy of a calibration result of the system position relationship is related to a distance from the plane mirror to the camera and a rotation angle of the plane mirror.

In a second calibration method, a plurality of auxiliary cameras are introduced to avoid changing a position of the plane mirror multiple times, and a final geometric position relationship is determined through pose conversion by taking the plurality of auxiliary cameras as conversion bridges.

Second calibration method:

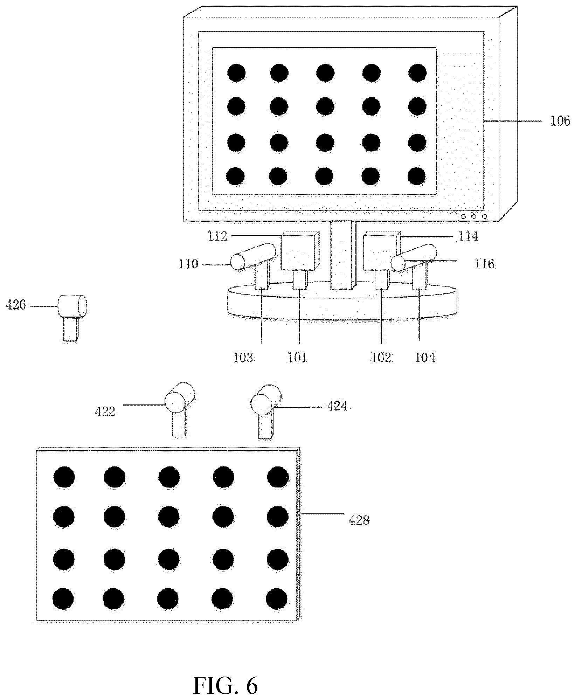

FIG. 6 is a diagram of another optional calibration scenario according to an embodiment of the present disclosure. As shown in FIG. 6, a plane mirror 320 is placed on a front side of the display 106. A third auxiliary camera is disposed in front of the line-of-sight tracking system. The third auxiliary camera is a stereo vision system that includes cameras 422 and 424. A calibration plate 428 is disposed beside the third auxiliary camera. Fields of view of the cameras 110 and 116 include a region of the calibration plate. The display 106 displays a fourth marker image. A fourth auxiliary camera 426 is configured to have a field of view including the cameras and the third auxiliary camera. A field of view of the stereo vision system includes all the cameras, light sources, and the display containing fifth markers.

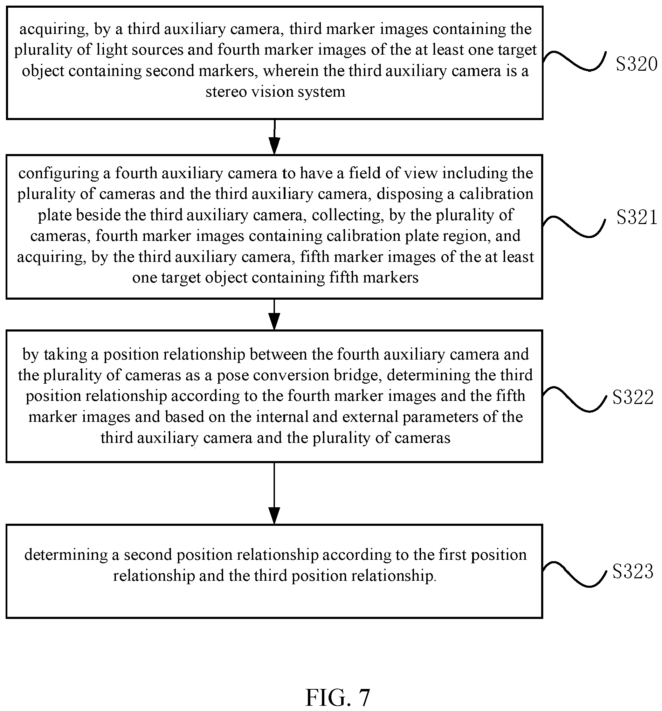

FIG. 7 is a flowchart of another optional calibration method according to an embodiment of the present disclosure. In an optional embodiment, obtaining the geometric position relationships based on the internal and external parameters of the plurality of cameras and by utilizing the auxiliary camera to transmit calibration information may include:

S320: acquiring, by a third auxiliary camera, third marker images containing the plurality of light sources, and acquiring the first position relationship based on the internal and external parameters of the plurality of cameras and based on the third marker images, wherein the third auxiliary camera is a stereo vision system;

This step is consistent with the step S312 of acquiring the first position relationship, and will not be described in detail here.

S321: configuring a fourth auxiliary camera to have a field of view including the plurality of cameras and the third auxiliary camera, disposing a calibration plate beside the third auxiliary camera, acquiring, by the plurality of cameras, fourth marker images containing a region of the calibration plate, and acquiring, by the third auxiliary camera, fifth marker images of the target object containing fifth markers;

As shown in FIG. 6, a calibration plate image containing fourth markers is displayed on the display 106, so that the third auxiliary camera can photograph most of calibration image regions. A calibration plate is placed beside the third auxiliary camera, so that cameras 110 and 116 can photograph most of a region of the calibration plate appearing on the two cameras at the same time. The fourth auxiliary camera is configured to have a field of view including the cameras and the third auxiliary camera. The cameras acquire the fourth marker images containing a region of the calibration plate, and the third auxiliary camera acquires the fifth marker images of the target object containing the fifth markers.

S322: by taking the position relationship between the fourth auxiliary camera and the plurality of cameras as a pose conversion bridge, determining the third position relationship according to the fourth marker images and the fifth marker images and based on internal and external parameters of the third auxiliary camera and the internal and external parameters of the plurality of cameras;

Specifically, the internal and external parameters of the plurality of cameras include internal and external parameters of the camera, the third auxiliary camera, and the fourth auxiliary camera. In this embodiment, the calibration of the plurality of cameras is implemented by using the prior art, and the specific techniques of calibrating the internal and external parameters of the plurality of cameras are not limited.

A position relationship between the cameras and the calibration plate is determined according to the acquired fourth marker images. A position relationship between the third auxiliary camera and the display is determined according to the fifth marker images. Since the fourth auxiliary camera photographs the cameras and the third auxiliary camera at the same time, the fourth auxiliary camera is used as a pose conversion bridge to implement the calibration of the pose relationship between the display and the cameras, thereby determining the third position relationship.

S323: determining the second position relationship according to the first position relationship and the third position relationship.

In the above embodiment, the additional auxiliary cameras and one calibration plate are introduced to implement the calibration. The calibration plate is placed in working ranges of the plurality of cameras. Through coordinate system conversion using the auxiliary cameras and the calibration plate, the calibration of the pose relationships among the plurality of cameras, the plurality of light sources, and the target object is finally implemented. This method is simple in principle and high in theoretical accuracy. However, in an actual operation process, since the position relationship between the plurality of cameras and the target object is fixed and the plurality of cameras cannot photograph the target object, when the calibration plate and the auxiliary camera are arranged according to the above requirements, an angle between an optical axis of the auxiliary camera and each of a normal vector of the calibration plate and a normal vector of the display is too large, which may result in that an acquired calibration pattern is unsatisfactory, an extraction error of the markers is large, and it is difficult to ensure the conversion accuracy.

The introduction of the auxiliary cameras increases the cost and complicates the calibration process. A third calibration method only relies on a fixed plane mirror, so that complicated operations caused by multiple movements are avoided; the third calibration method does not rely on auxiliary cameras, so that the problem of too large a range of an angle between objects acquired by the auxiliary cameras is avoided. The calibration process is simplified and the cost is reduced.

Third calibration method:

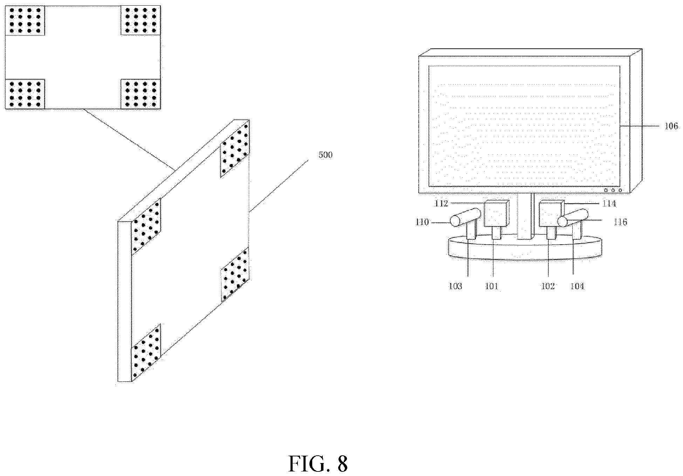

FIG. 8 is a diagram of another optional calibration scenario according to an embodiment of the present disclosure. As shown in FIG. 8, a plane mirror 320 is placed on a front side of the display 106. A plurality of marker patterns are pasted on the plane mirror 320. The marker patterns may be round dots, checkerboards, concentric circles, or other easily distinguishable patterns. A number of the marker patterns is not less than 4. The distribution of the marker patterns on the display is not particularly limited. The plane mirror reflects the display 106, the camera 110, the camera 116, the light source 112, and the light source 114. The fields of view of the cameras include images of all the cameras, the light sources, and the display containing markers projected on the plane mirror.

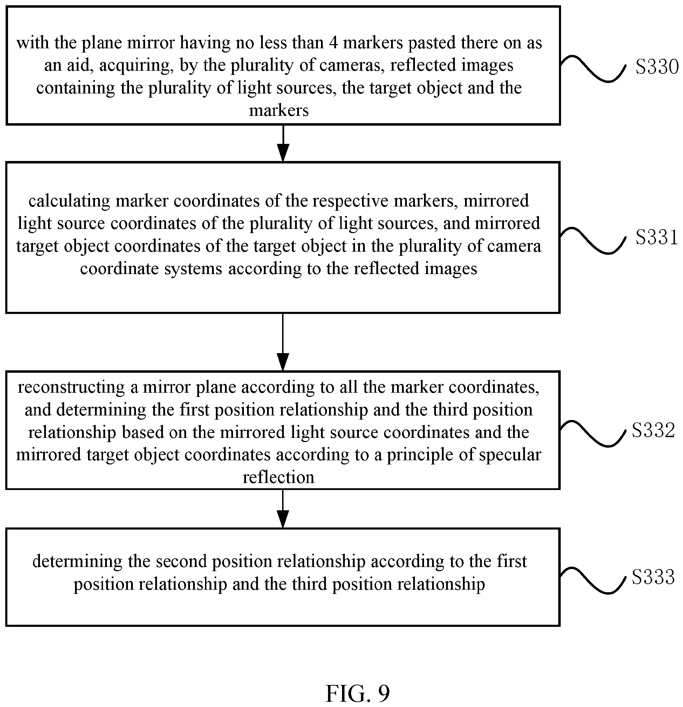

FIG. 9 is a flowchart of another optional calibration method according to an embodiment of the present disclosure.

In an optional embodiment, obtaining the geometric position relationships based on the internal and external parameters of the plurality of cameras and by utilizing the plane mirror to transmit calibration information may include:

S330: with the plane mirror having no less than 4 markers pasted thereon as an aid, acquiring, by the plurality of cameras, reflected images containing the plurality of light sources, the target object, and the markers;

S331: calculating marker coordinates of the respective markers, mirrored light source coordinates of the plurality of light sources, and mirrored target object coordinates of the target object in the plurality of camera coordinate systems according to the reflected images;

S332: reconstructing a mirror plane according to all the marker coordinates, and determining the first position relationship and the third position relationship based on the mirrored light source coordinates and the mirrored target object coordinates according to a principle of specular reflection; and

S333: determining the second position relationship according to the first position relationship and the third position relationship.

In embodiments of the present application, a basic idea of the third calibration method may be to paste a plurality of marker patterns on the plane mirror 500. The marker patterns may be round dots, checkerboards, concentric circles, or other easily distinguishable patterns. A number of the marker patterns is not less than 4. The distribution of the marker patterns on the display is not particularly limited. The plurality of cameras cannot directly acquire the target object and the light sources. Based on the principle of specular reflection, for example, in FIG. 8, the plane mirror reflects the display 106, the camera 110, the camera 116, the light source 112, and the light source 114. The cameras, facing the mirror surface, acquire reflected images. The images include images of all the cameras, the light sources, and the display containing the markers projected on the plane mirror. The marker coordinates of the markers in the plurality of camera coordinate systems are determined according to the reflected images containing all the markers. The mirrored light source coordinates of the virtual images of the light sources in the plurality of camera coordinate systems and the mirrored target object coordinates of the target object in the plurality of camera coordinate systems are determined according to the reflected images containing the light sources and the target object through mirror projection. The mirror plane is reconstructed in the plurality of camera coordinate systems according to the coordinates of the at least 4 markers. The mirrored light sources correspond to the actual light sources in the plurality of camera coordinate systems according to the principle of specular reflection. The first position relationship is determined according to the coordinates of the mirrored light sources based on the mirror plane. Similarly, the third position relationship is determined based on the mirrored target object coordinates. The second position relationship is determined according to the first position relationship and the third position relationship. The third calibration method only relies on the fixed plane mirror, so that complicated operations caused by multiple movements are avoided. The third calibration method does not rely on the auxiliary cameras, so that the problem of too large a range of an angle between objects acquired by the auxiliary cameras is avoided. The calibration procedure is simplified and the cost is reduced effectively. S300: determining a line-of-sight optical axis according to the coordinates of the light source reflection point and the coordinates of the pupil center, and reconstructing, based on the line-of-sight optical axis, a line-of-sight visual axis by means of a compensation angle;

In an optional embodiment, determining a line-of-sight optical axis according to the coordinates of the light source reflection point and the coordinates of the pupil center includes:

determining coordinates of a corneal curvature center according to the coordinates of the light source reflection point and a corneal curvature radius; and

determining, as the line-of-sight optical axis, a connecting line between the pupil center and the corneal curvature center according to the coordinates of the pupil center and the coordinates of the corneal curvature center.

According to the principle of camera imaging and the principles of light reflection and refraction, based on the position coordinates and internal and external parameters of the cameras that acquire the images as well as positions of the light sources, the corneal curvature center in the world coordinate system may be calculated and determined. The optical axis direction is the direction of the connecting line between the pupil center and the corneal curvature center. The optical axis direction may be determined by simply calculating the coordinates of the pupil center and the coordinates of the corneal curvature center. For example, the optical axis direction may be determined by subtracting the coordinates of the pupil center from the coordinates of the corneal curvature center and performing a modulo operation.

Specifically, according to optical principles, for each set of cameras for acquisition, the corneal curvature center and the pupil center are coplanar with the pupil imaging point on an imaging plane of the camera and coordinates of an optical center of the camera. When there are two coplanar relationships, a unit vector of an intersection line of the two coplanar planes is the line-of-sight optical axis, and the line connecting the pupil center and the corneal curvature center is the line-of-sight optical axis. The line-of-sight optical axis is determined based on a plane geometric relationship and optical principles.

Line-of-sight estimation methods based on corneal pupil reflection usually can only find the optical axis of the eyeball. According to an actual structure of the human eye, the line of sight of the user is determined by the visual axis, and there is a compensation angle between the visual axis and the optical axis. The present application does not consider possible influences on the compensation angle of the user when the eye is deformed or abnormal. However, in a real situation, the eyeball and the cornea are not spheres, which leads to different reconstruction errors when a line-of-sight estimation method based on corneal pupil reflection reconstructs the optical axis of the eyeball when staring at different positions.

In the exemplary embodiments of the present application, two feasible methods for reconstructing the line-of-sight visual axis from the line-of-sight optical axis based on the compensation angle are provided.

First reconstruction method:

The structure of the human eye determines that there is a compensation angle between the line-of-sight optical axis and the line-of-sight visual axis, which is called a Kappa angle. Assuming that the compensation angle between the line-of-sight optical axis and the line-of-sight visual axis is a constant that does not change depending on the individual, the Kappa angle is used as a fixed compensation between the optical axis and the visual axis. Under this assumption, it is not necessary to estimate a Kappa compensation of the individual through correction. This embodiment may not calibrate the compensation angle, or simply calibrate the compensation angle through a few points, so that line-of-sight tracking is implemented more easily.

In an optional embodiment, before reconstructing the line-of-sight visual axis based on the line-of-sight optical axis by the compensation angle, the method further includes: acquiring a set of sample images when the user gazes at each preset gaze point; determining first compensation angle samples according to sample features extracted from each set of sample images; and traversing all the first compensation angle samples and acquiring the compensation angle through screening and purification.

In an optional embodiment, extracting sample features for each set of sample images and determining first compensation angle samples according to the sample features extracted from each set of sample images includes:

extracting sample features for each set of sample images, and reconstructing a first line-of-sight optical axis according to the sample features;

deriving a first line-of-sight visual axis based on real coordinates of the preset gaze point; and

acquiring the first compensation angle samples according to the first line-of-sight optical axis and the first line-of-sight visual axis.

In an optional embodiment, traversing all the first compensation angle samples and acquiring the compensation angle through screening and purification, includes:

finding a center point of all the first compensation angle samples, and screening and removing the samples that are not within a first threshold range; and

continuing to traverse, screen, and purify all the remaining samples until a difference between a current center point and a previous center point is lower than a second threshold, and acquiring the compensation angle from all the purified samples.

Specifically, positions of the preset gaze points are known, and the gaze points are evenly distributed in space. The user gazes at a gaze point at a known position. The line-of-sight optical axis is reconstructed based on the corneal pupil method according to the sample features contained in the acquired sample images, and the line-of-sight visual axis is restored based on the pupil center coordinates and the preset gaze point. The compensation angle samples corresponding to the gaze points are further obtained. There will be errors, such as detection errors, in the process of acquiring the compensation angle sample set based on the preset gaze points. According to the present disclosure, the compensation angle samples are purified, abnormal samples are eliminated, and high-quality and reasonably distributed samples in the threshold range are kept, so that the accuracy of the compensation angle is ensured to a certain extent and the applicability of the final compensation angle is ensured. The present application may not calibrate or simply calibrate through a few points, so that line-of-sight tracking is implemented more easily.

In an actual scenario, since users who use the line-of-sight tracking system have different eyeball parameters, if a fixed compensation angle is adopted, it will affect the application of the line-of-sight tracking method in a line-of-sight tracking scenario with higher accuracy. In a second reconstruction method, a dynamic compensation model is introduced, and personalized compensation calibration is performed for different users respectively before the dynamic compensation model is used, so as to track a line-of-sight direction with higher accuracy.

Second reconstruction method

In an optional embodiment, before reconstructing the line-of-sight visual axis based on the line-of-sight optical axis by means of the compensation angle, the method further includes: determining a deviation between a predicted line-of-sight observation point and a real line-of-sight observation point through a dynamic compensation model for the acquired data, and acquiring the compensation angle according to the deviation.

Specifically, in the application of an actual line-of-sight direction tracking method, each frame of the acquired data is inputted into the trained dynamic compensation model to predict the deviation, which is the deviation between the predicted line-of-sight observation point and the real line-of-sight observation point, and the compensation angle is acquired according to the deviation. The predicted line-of-sight observation point may be calculated by the method of reconstructing the line-of-sight optical axis. In addition, embodiments of the present disclosure do not limit the type of the dynamic compensation model, which may be a neural network, a random model forest, etc.

Furthermore, in order to achieve personalized compensation calibration for different users, initialization is needed before the trained dynamic compensation model is used, to obtain a dynamic compensation model that fits a current user.

In an optional embodiment, initializing the dynamic compensation model before the dynamic compensation model is used includes:

acquiring a set of initial sample images when the user gazes at each preset initial point; and

extracting initial sample features for each set of initial sample images, and obtaining the dynamic compensation model that fits the current user through few-shot learning initialization according to the initial sample features.

Specifically, the current user gazes at a preset initial point, and positions of the preset initial points are known and evenly distributed in space. A set of sample images are acquired for each preset initial point, and a number of gaze points acquired is at least 3. Further, initial sample features are extracted for each set of initial sample images, and the dynamic compensation model that fits the current user is obtained through few-shot learning initialization according to the initial sample features. The initial sample features extracted from the sample images include, but are not limited to, three-dimensional coordinates of a corneal sphere center, an Euler angle of the eyeball optical axis, a line-of-sight observation point calculated based on the optical axis, a human face deflection angle, etc. The dynamic compensation model may have a generalization ability of the model under a condition of a learning category change in a short time through few-shot learning, and the dynamic compensation model initialized by prior knowledge of the current user is utilized to provide a good search direction for data acquired by a subsequent current user, so that prediction errors are reduced and the efficiency of prediction deviation is improved at the same time. The embodiments of the present disclosure are not limited to few-shot learning methods, such as an MAML method.

In an optional embodiment, training the dynamic compensation model includes:

acquiring a plurality of sets of sample data when a plurality of users gaze at preset calibration points respectively;

cleaning the plurality of sets of sample data, and extracting training sample features from the cleaned plurality of sets of samples; and

training an initial dynamic compensation model according to the training sample features by using few-shot learning to acquire the trained dynamic compensation model.

In addition, the trained dynamic compensation model is acquired based on the initial dynamic compensation model through the steps above. A plurality of sets of sample data are acquired. Each test subject is required to gaze at several calibration points having preset positions and evenly distributed on the target object, and a same number of samples are acquired correspondingly. After initial sample data is obtained, the sample data is cleaned, and samples that do not meet requirements of a line-of-sight estimation algorithm are removed, such as samples having incomplete reflection points of the light source and serious blurring of a picture. Further, sample features are extracted for each set of cleaned and purified sample images, and the initial dynamic compensation model is trained by using few-shot learning according to the training sample features to acquire the trained dynamic compensation model. The training sample features extracted from multiple sets of sample data include, but are not limited to, three-dimensional coordinates of a corneal sphere center, an Euler angle of the eyeball optical axis, a line-of-sight observation point calculated based on the optical axis, a human face deflection angle, etc. After the acquired data is inputted, the trained dynamic compensation model can acquire a highly accurate deviation between the predicted line-of-sight observation point and the real line-of-sight observation point, so as to obtain a compensation angle with high accuracy.

The reconstruction method for reconstructing the line-of-sight visual axis by the line-of-sight optical axis through the compensation angle includes: in an actual line-of-sight direction tracking scenario, generating a dynamic compensation model that fits the current user in an initialization manner, and subsequently using the generated dynamic compensation model to predict the deviation for the data acquired by the current user to further obtain a better compensation angle, and finally reconstructing a line-of-sight visual axis with high accuracy.

S400: determining a point of sight on a target object according to the line-of-sight visual axis and a position of the target object in the world coordinate system.

The line-of-sight visual axis is located in the world coordinate system. To determine the point of sight of the visual axis on the target object, it is necessary to determine the position of the target object in the world coordinate system. The geometric position relationship may provide the position of the target object in the world coordinate system, and a plane of the target object in the world coordinate system is further determined. Specifically, the problem of determining the point of sight of the user is transformed into the problem of determining an intersection of a line-of-sight visual axis vector and a plane where the target object is located in the same coordinate system. The present disclosure does not limit the method of solving the intersection problem.

In order to reduce the hardware manufacturing cost and the efficiency of algorithm optimization, embodiments of the present disclosure further include establishing a simulation system to simulate the tracking accuracy and anti-interference ability of the line-of-sight tracking system under various hardware conditions, eyeball states, algorithm designs, and other factors.

In an optional embodiment, the method further includes performing simulation verification, analysis, and optimization through preset eyeball parameters, the compensation angle, the hardware calibration parameters, and a preset point of sight.

In an optional embodiment, performing simulation verification, analysis, and optimization through preset eyeball parameters, the compensation angle, the hardware calibration parameters, and a preset point of sight includes:

performing, for the preset point of sight, simulation according to the eyeball parameters, the compensation angle, and the hardware calibration parameters to calculate a reconstructed light source imaging point and a reconstructed pupil imaging point;

determining a predicted point of sight according to the line-of-sight direction tracking method based on the reconstructed light source imaging point and the reconstructed pupil imaging point; and

performing statistical analysis according to comparison values of the preset point of sight and the predicted point of sight and carrying out verification and optimization according to an analysis result.

Specifically, a line-of-sight tracking scenario is simulated as needed, and eyeball parameters and geometric position relationships are preset. The eye parameters include, but are not limited to, three-dimensional coordinates of an eyeball center, an eyeball radius, three-dimensional coordinates of a corneal sphere center, a corneal sphere radius, a distance from the eyeball center to the corneal sphere center, three-dimensional coordinates of a pupil center, three-dimensional coordinates of an iris center, an iris radius, a corneal refractive index, a lens refractive index, an eyeball optical axis, an eyeball visual axis and a Kappa angle, and other parameters used to model a three-dimensional model of an eyeball. Hardware calibration parameters include, but are not limited to, camera internal parameters, camera external parameters, camera distortion parameters, camera stereo calibration parameters, camera three-dimensional coordinates, light source three-dimensional coordinates and target object three-dimensional coordinates, etc. Image data needed to determine the line-of-sight direction based on corneal pupil reflection is simulated according to the set point of sight through the preset parameters, including three-dimensional coordinates of a reflection point of a reconstructed light source on the cornea (a reconstructed light source reflection point), projection coordinates of a light source reflection point on a camera image plane (a reconstructed light source imaging point) and projection coordinates of the pupil center on the camera image plane (a reconstructed pupil imaging point). Further, according to the inputted actual parameters, the simulation system verifies whether the implementation of the line-of-sight direction tracking method is correct, tests an influence of a disturbance added to the inputted parameters on a point-of-sight error, and searches for an optimal configuration method of the plurality of light sources, the plurality of cameras and the target object.

In an optional embodiment, performing, for the preset point of sight, simulation according to the preset eyeball parameters, the compensation angle and the hardware calibration parameters to calculate a reconstructed light source imaging point and a reconstructed pupil imaging point includes:

determining a light source-cornea-camera angle according to a corneal center in the preset eyeball parameters and the hardware calibration parameters, determining coordinates of a reconstructed light source reflection point based on the light source-cornea-camera angle and a corneal curvature radius in the preset eyeball parameters and based on a principle of spherical reflection, and calculating the reconstructed light source imaging point according to the coordinates of the reconstructed light source reflection point and based on the hardware calibration parameters; and

determining a first visual axis according to coordinates of the preset point of sight and the corneal center in the preset eyeball parameters, deriving a first optical axis based on the first visual axis and the compensation angle, determining coordinates of a reconstructed pupil center according to the first optical axis and based on a distance between the pupil center and the corneal center of the preset eyeball parameters, and calculating the reconstructed pupil imaging point according to the coordinates of the pupil center and based on the hardware calibration parameters.

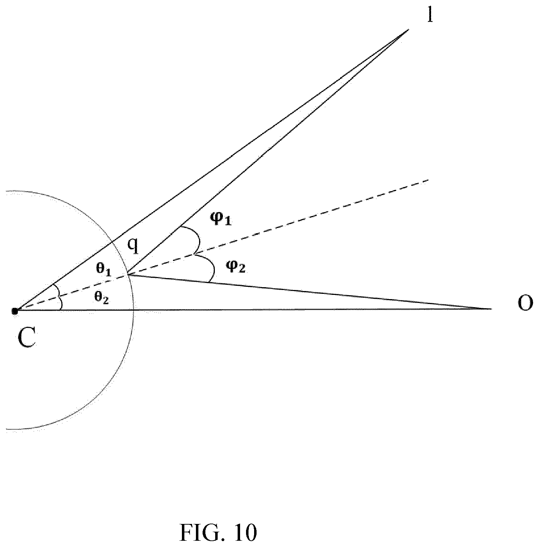

FIG. 10 is a schematic diagram of an optional method for reconstructing a light source reflection point according to an embodiment of the present disclosure. As shown in FIG. 10, a corneal center $C$, a camera optical center $O$, and a light source center $I$ in the world coordinate system are acquired according to preset parameters. A center of a corneal sphere corresponding to a corneal region irradiated by the light source is on the optical axis of the eyeball, and a radius $R_c$ is fixed. According to the principle of spherical reflection, the light emitted from the light source center is totally reflected at a reflection point $q$ on the corneal surface, and the reflected light is projected onto the image plane through a camera center $O$. As can be known according to the reflection theorem, $\theta_1 = $

$$\theta_2 = \frac{1}{2} \angle ICO$$

and

$$\varphi_1 = \varphi_2 = \frac{1}{2} \angle IqO$$

, and a coordinate system TCS is established with the corneal center as an origin, with $\overrightarrow{CO}$ a new X axis $\hat{\imath}$,

$$\overrightarrow{CO} \times \overrightarrow{CI} \Big/ \left\| \overrightarrow{CO} \times \overrightarrow{CI} \right\|$$

as a new Z axis $\hat{k}$, and

$$\hat{k} \times \hat{\imath} \Big/ \left\| \hat{k} \times \hat{\imath} \right\|$$

as a new Y axis $\mathbf{j}$. Then according to the coordinate system TCS relative to the world coordinate system, there exist $R = [\hat{\imath} \, \hat{\jmath} \, \hat{k}]$ and $T = -R \cdot C$, the TCS is converted into the world coordinate system by

$$M_{TW} = \begin{bmatrix} R & T \\ 0 & 1 \end{bmatrix}$$

, and the world coordinate system is converted into TCS by $M_{WT} = M_{TW}^{-1}$. Next, $M_{WT}$ is used to convert $C$, $O$, $I$ to TCS. $\angle ICO$ under the TCS is calculated, then $\theta_2$ is found, to further obtain $q = (R_c \cdot \cos \theta_2, R_c \cdot \sin \theta_2, 0)$, and finally $M_{TW}$ is used to convert $q$ into the world coordinate system to finally acquire coordinates of the reconstructed light source reflection point.

The simulation system supports the positioning of a plurality of preset gaze points to assist in verifying whether the implementation of the line-of-sight direction tracking method is correct. Specifically, by taking the target object included in the simulation system being a screen as an example, a plurality of gaze points with known positions appear on the screen. When a simulated eyeball in the simulation system gazes at a certain gaze point, a line-of-sight visual axis can be calculated according to the position of the gaze point and the coordinates of the corneal sphere center included in the preset eyeball parameters. Then an optical axis is derived according to a preset compensation angle. Finally, coordinates of the pupil center are reconstructed according to a preset distance from the pupil center to the corneal sphere center.

In an optional embodiment, the preset point of sight may be preset in advance or randomly generated at a plurality of different positions to simulate tracking of various line-of-sight angles. Specifically, a plurality of preset points at different positions are generated to simulate an error of line-of-sight tracking when the eyeball looks at different positions of the target object.

In an optional embodiment, performing statistical analysis according to comparison values of the preset point of sight and the predicted point of sight and carrying out verification and optimization according to an analysis result includes: verifying whether implementation of the line-of-sight direction tracking method is correct, testing an influence of a disturbance added to the inputted parameters on a point-of-sight error, and determining a configuration method of the plurality of light sources, the plurality of cameras, and the target object. Specifically, calculation performed through simulation.

In a simulation process, actual hardware parameters and actual image pixel processing are not involved. Through the preset point of sight, based on the eyeball parameters and the hardware calibration parameters included in the simulation system, the reconstructed light source reflection point and the reconstructed pupil imaging point are calculated. Then the predicted point of sight is determined according to the line-of-sight direction tracking method based on corneal pupil reflection, and the correctness of the implementation of the line-of-sight direction tracking method is verified according to forward and backward verification. In this process, the simulation system involves multiple variables, including the geometric position relationships, the eyeball parameters, the point of sight, etc.. The abnormality of any variable will lead to a failure of verification of the correctness, and if a result of the failure of verification is obtained, the abnormal variable is further screened and identified by controlling variables and other methods, so that the optimization efficiency of the line-of-sight tracking method can be improved.

In addition, the simulation system calculates the predicted point of sight after disturbance is added to the inputted parameters, and tests the influence of the disturbance on the point-of-sight error by comparing the predicted point of sight with the real point of sight.

The simulation system may impose any type of disturbance on each parameter to simulate the performance of the designed line-of-sight tracking system in actual use. By comparing a predicted value of the point of sight calculated by using the disturbed parameters with a true value of the point of sight, as well as performing statistical analysis of a Euclidean distance, an angle error, and a variance, subsequent design and algorithm optimization of the line-of-sight tracking system can be guided purposefully. For example, if the camera calibration parameters are disturbed, the influence of a calibration error on the system can be tested. For key points such as the light source reflection point and the pupil center, the influence of an error of a key point detection algorithm on the system can be tested by disturbing image pixels. In addition, a large number of experiments and data analysis of the simulation system are performed to find an optimal hardware configuration method for implementing the high-accuracy line-of-sight tracking method, so that the hardware cost is reduced greatly and the efficiency of optimizing the line-of-sight tracking method is improved.

In this embodiment, a line-of-sight direction tracking apparatus is also provided. The apparatus is configured to implement the above embodiments and the preferred implementations, and the description thereof is not repeated here. As used below, the term "module" is a combination of software and/or hardware that can implement predetermined functions. Although the apparatus described in the embodiments below are preferably implemented in software, an implementation in hardware or a combination of software and hardware is also possible and is contemplated.

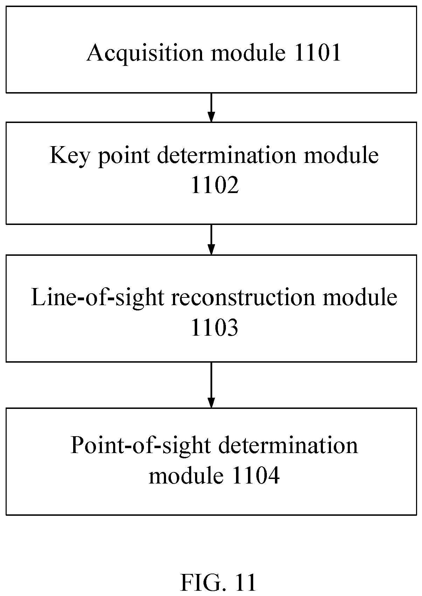

With reference to FIG. 11, it is a structural block diagram of an optional line-of-sight direction tracking apparatus according to an embodiment of the present disclosure. As shown in FIG. 11, the line-of-sight direction tracking apparatus 1100 includes an acquisition module 1101, a key point determination module 1102, a line-of-sight reconstruction module 1103, and a point-of-sight determination module 1104.

The units included in the line-of-sight direction tracking apparatus 1100 will be described in detail below.

The acquisition module 1101 is configured to provide corneal reflection for an eye of a user by using a plurality of light sources, and capture images including a face of the user by using a plurality of cameras.

Specifically, the user gazes at the target object. A plurality of light sources are used to emit infrared light to the eye of the user, and a plurality of cameras may be used to capture images containing a pupil imaging point and positions of light source reflection points obtained by infrared light sources through corneal reflection in real time. The plurality of cameras may be used to capture images of the face of the user when the user gazes at a scenario in real time. The images of the face of the user do not mean images that only include a face region of the user, but the captured images include the face region of the user. In order to improve the accuracy of subsequent feature detection and feature extraction, when the plurality of cameras capture the images of the face of the user, they can focus on acquiring the face region of the user to obtain face images with clear facial features. The target that the user gazes at may be a display device, a screen for outputting image content and text content, such as a screen, a display, and a head-mounted display, or may be a non-display device, such as a windshield.

In an optional embodiment, the plurality of cameras, the plurality of light sources, and the target object face the user, and fields of view of the plurality of cameras do not include the plurality of light sources and the target object. In an actual line-of-sight tracking system, the plurality of light sources, the plurality of cameras, and the target object are configured on a same side, wherein the present disclosure does not limit specific numbers of the cameras, the light sources, and the target object, and specific arrangements and positions of the devices. A position relationship between any two of the plurality of light sources, the plurality of cameras, and the target object in the line-of-sight tracking system may be preset or obtained based on calibration.

The key point determination module 1102 is configured to determine coordinates of a light source reflection point and coordinates of a pupil center in a world coordinate system by means of a human eye feature set acquired from the images including the face, based on hardware calibration parameters.

Detection and feature extraction is performed on the images containing the face to obtain a human eye feature set. In an optional embodiment, the human eye feature set includes a light source imaging point and a pupil imaging point. In this embodiment, the detection and feature extraction on the images containing the face is implemented by the prior art. The present application is not limited to specific techniques for obtaining the human eye feature set, and a traditional image processing method and an image processing method based on deep learning may be used.

In an optional embodiment, the hardware calibration parameters include internal and external parameters of a plurality of camera coordinate systems and geometric position relationships, wherein the geometric position relationships include: a first position relationship between a plurality of light source coordinate systems and the plurality of camera coordinate systems, a second position relationship between the plurality of light source coordinate systems and a target object coordinate system, and a third position relationship between the plurality of camera coordinate systems and the target object coordinate system. And, when any two position relationships of the geometric position relationships are acquired, the remaining one position relationship may be determined through the spatial transformation relationship and the known two position relationships. Through the hardware calibration parameters, a mapping relationship between any pixel coordinates and the world coordinate system, and a mapping relationship between a coordinate system where any hardware is located and the world coordinate system may be obtained.

In a method for determining the line-of-sight optical axis based on corneal pupil reflection, the determination of the light source reflection point coordinates and the pupil center coordinates in the world coordinate system according to the human eye feature set needs to be based on positions of the plurality of cameras and the plurality of light sources in the same world coordinate system, and the positions of the light sources and the cameras in the world coordinate system may be determined respectively according to the mapping relationship contained in the hardware calibration parameters.

In addition, a light source reflection point is a reflection point of light emitted from a light source center on a corneal surface. A light source imaging point is the imaging of a light source reflection point in an acquired image containing a face of a user. A pupil center is a center point of a pupil region. A pupil imaging point is the imaging of a pupil refraction point after a pupil center is refracted by a cornea in an acquired image containing a face of a user. The cornea of the eye is modeled as a sphere, a corneal curvature center is a sphere center of the sphere; a cornea radius is a distance from the corneal curvature center to a surface of the corneal sphere; and an optical axis direction is a direction of a connecting line between the pupil center and the corneal curvature center. Similarly, a human eyeball may also be modeled as an eyeball center, which is a sphere center of the eyeball, and the eyeball center is also located on the optical axis. According to the optical principle, a corneal curvature radius may be acquired based on a position of a light source and a light source imaging point.

The light source imaging point is the imaging of the light source reflection point in the acquired image containing the face of the user. According to the camera imaging principle, the coordinates of the light source reflection point in the world coordinate system are determined based on the position coordinates and internal and external parameters of the plurality of cameras that acquire the images. It should be noted that the number of light sources may be one or plural. When the plurality of light sources are working, each light source contains a corresponding light source reflection point, and a method for determining coordinates of each light source in the world coordinate system is consistent with the method above. Similarly, the pupil imaging point is the imaging of the pupil refraction point after the pupil center is refracted by the cornea in the acquired image containing the face of the user. According to the camera imaging principle, coordinates of the pupil center in the world coordinate system are determined based on the position coordinates and internal and external parameters of the camera that acquires the image.

In an optional embodiment, the world coordinate system may be selected from any one of a light source coordinate system, a camera coordinate system and a target object coordinate system. That is, the world coordinate system may be a stereo coordinate system of any specified light source, camera or target object.

It can be seen from the above that through the hardware calibration parameters, a mapping relationship between any pixel coordinates and the world coordinate system, and a mapping relationship between a coordinate system where any hardware is located and the world coordinate system may be obtained. A face feature set is two-dimensional information in a pixel coordinate system. Through the mapping relationship between the any pixel coordinates and the world coordinate system, the light source reflection point coordinates and the pupil center coordinates in the world coordinate system may be obtained, and there are the following situations according to the specified world coordinate system.

In an optional embodiment, the key point determination module 1102 includes:

a first determination unit 11021 configured to, in a case where the world coordinate system is the light source coordinate system, determine, based on the face feature set, the coordinates of the light source reflection point and the coordinates of the pupil center in the light source coordinate system through the internal and external parameters of the plurality of cameras and based on the first position relationship, or based on the second position relationship and the third position relationship;

a second determination unit 11022 configured to, in a case where the world coordinate system is the camera coordinate system, determine, based on the face feature set, the coordinates of the light source reflection point and the coordinates of the pupil center in the plurality of camera coordinate systems through the internal and external parameters of the plurality of cameras; and

a third determination unit 11023 configured to, in a case where the world coordinate system is the target coordinate system, determine, based on the face feature set, the coordinates of the light source reflection point and the coordinates of the pupil center in the target object coordinate system through the internal and external parameters of the plurality of cameras and based on the third position relationship, or based on the first position relationship with the second position relationship.

Further, the present application does not limit the method for determining the internal and external parameters of the plurality of cameras, and the internal and external parameters of the plurality of cameras may be acquired through preset factory parameters or through calibration. The present application also does not limit the method for calibrating the internal and external parameters of the plurality of cameras. For example, the internal and external parameters of the plurality of cameras are calibrated by using a calibration plate.

In an optional embodiment, the key point determination module 1102 includes a calibration unit 11024 configured to obtain the geometric position relationships based on the internal and external parameters of the plurality of cameras and by utilizing at least one of a plane mirror and an auxiliary camera to transmit calibration information for calibration.

Since the fields of view of the plurality of cameras do not include the plurality of light sources and the target object, at least one of the plane mirror and the auxiliary camera is used to transmit the calibration information, and the geometric position relationships are found based on the calibration information. Specifically, a calibration process aims to obtain the geometric position relationships among the plurality of cameras, the plurality of light sources, and the target object. However, in this embodiment, due to the limitation of reflected light paths and that the plurality of light sources, the plurality of cameras, and the target object included in the line-of-sight tracking system are configured on the same side, the cameras cannot directly observe the target object or can only observe a part of the target object. According to the present application, the geometric position relationships are obtained based on the internal and external parameters of the plurality of cameras and by utilizing at least one of a plane mirror and an auxiliary camera to transmit calibration information for calibration.

In an optional embodiment, the calibration unit 11024 includes a first calibration unit 24100 configured to obtain the geometric position relationships based on the internal and external parameters of the plurality of cameras and by utilizing the plane mirror and the auxiliary camera to transmit calibration information for calibration, wherein the first calibration unit 24100 includes:

a first calibration subunit 24101 configured to acquire, by a first auxiliary camera, a plurality of first marker images of the target object containing first markers reflected by the plane mirror in a plurality of different poses;

a second calibration subunit 24102 configured to calculate the third position relationship based on an orthogonal constraint according to the plurality of first marker images and based on the internal and external parameters of the plurality of cameras;

a third calibration subunit 24103 configured to acquire, by a second auxiliary camera, second marker images containing the plurality of light sources, and acquire the first position relationship based on the internal and external parameters of the plurality of cameras and based on the second marker images, wherein the second auxiliary camera is a stereo vision system; and

a fourth calibration subunit 24104 configured to determine the second position relationship according to the first position relationship and the third position relationship.

Calibration results with high accuracy and robustness may be obtained through the above units. Based on reflective imaging of the target object by the plane mirror, a system pose relationship is determined based on an orthogonal constraint according to the established pose relationship between the target object and a virtual image of the target object in the plane mirror. Since a position of the plane mirror needs to be changed multiple times, the camera needs to acquire multiple images reflected by the mirror surface, and the movement of the mirror needs to meet preset conditions. Thus, the operations are complicated and inefficient. In addition, the linear solution based on the orthogonal constraint in the mirror surface calibration method is usually sensitive to noise, and the accuracy of a calibration result of the system position relationship is related to a distance from the plane mirror to the camera and a rotation angle of the plane mirror.

In an optional embodiment, the calibration unit 11024 includes a second calibration unit 24200 configured to obtain the geometric position relationships based on the internal and external parameters of the plurality of cameras and by utilizing the auxiliary camera to transmit calibration information for calibration, wherein the second calibration unit includes:

a fifth calibration subunit 24201 configured to acquire, by a third auxiliary camera, third marker images containing the plurality of light sources, and acquire the first position relationship based on the internal and external parameters of the plurality of cameras and based on the third marker images, wherein the third auxiliary camera is a stereo vision system;

a sixth calibration subunit 24202 configured to configure a fourth auxiliary camera to have a field of view including the plurality of cameras and the third auxiliary camera, dispose a calibration plate beside the third auxiliary camera, acquire, by the plurality of cameras, fourth marker images containing a region of the calibration plate, and acquire, by the third auxiliary camera, fifth marker images of the target object containing fifth markers;

a seventh calibration subunit 24203 configured to, by taking the position relationship between the fourth auxiliary camera and the plurality of cameras as a pose conversion bridge, determine the third position relationship according to the fourth marker images and the fifth marker image and based on internal and external parameters of the third auxiliary camera and the internal and external parameters of the plurality of cameras; and

an eighth calibration subunit 24204 configured to determine the second position relationship according to the first position relationship and the third position relationship.

In the above embodiment, the additional auxiliary cameras and one calibration plate are introduced to implement the calibration. The calibration plate is placed in working ranges of the plurality of cameras. Through coordinate system conversion using the auxiliary cameras and the calibration plate, the calibration of the pose relationships among the plurality of cameras, the plurality of light sources, and the target object is finally implemented. This method is simple in principle and high in theoretical accuracy. However, in an actual operation process, since the position relationship between the plurality of cameras and the target object is fixed and the plurality of cameras cannot photograph the target object, when the calibration plate and the auxiliary camera are arranged according to the above requirements, an angle between an optical axis of the auxiliary camera and each of a normal vector of the calibration plate and a normal vector of the display is too large, which may result in that an acquired calibration pattern is unsatisfactory, an extraction error of the markers is large, and it is difficult to ensure the conversion accuracy. The introduction of the auxiliary cameras increases the cost and complicates the calibration process.

In an optional embodiment, the calibration unit 11024 includes a third calibration unit 24300 configured to obtain the geometric position relationships based on the internal and external parameters of the plurality of cameras and by utilizing the plane mirror to transmit calibration information for calibration, wherein the third calibration unit 24300 includes:

a ninth calibration subunit 24301 configured to, with the plane mirror having no less than 4 markers pasted thereon as an aid, acquire, by the plurality of cameras, reflected images containing the plurality of light sources, the target object, and the markers;

a tenth calibration subunit 24302 configured to calculate marker coordinates of the respective markers, mirrored light source coordinates of the plurality of light sources, and mirrored target object coordinates of the target object in the plurality of camera coordinate systems according to the reflected images;

an eleventh calibration subunit 24303 configured to reconstruct a mirror plane according to all the marker coordinates, and determine the first position relationship and the third position relationship based on the mirrored light source coordinates and the mirrored target object coordinates according to a principle of specular reflection; and

a twelfth calibration subunit 24304 configured to determine the second position relationship according to the first position relationship and the third position relationship.

The third calibration unit 24300 acquires reflected images by the cameras facing the mirror surface, and the images include images of all the cameras, the light sources, and the display containing the markers projected on the plane mirror. The marker coordinates of the markers in the plurality of camera coordinate systems are determined according to the reflected images containing all the markers. The mirrored light source coordinates of the virtual images of the light sources in the plurality of camera coordinate systems and the mirrored target object coordinates of the target object in the plurality of camera coordinate systems are determined according to the reflected images containing the light sources and the target object through mirror projection. The mirror plane is reconstructed in the plurality of camera coordinate systems according to the coordinates of the at least 4 markers. The mirrored light sources correspond to the actual light sources in the plurality of camera coordinate systems according to the principle of specular reflection. The first position relationship is determined according to the coordinates of the mirrored light sources based on the mirror plane. Similarly, the third position relationship is determined based on the mirrored target object coordinates. The second position relationship is determined according to the first position relationship and the third position relationship. The third calibration method only relies on the fixed plane mirror, so that complicated operations caused by multiple movements are avoided. The third calibration method does not rely on the auxiliary cameras, so that the problem of too large a range of an angle between objects acquired by the auxiliary cameras is avoided. The calibration procedure is simplified and the cost is reduced effectively.

The line-of-sight reconstruction module 1103 is configured to determine a line-of-sight optical axis according to the coordinates of the light source reflection point and the coordinates of the pupil center, and reconstruct, based on the line-of-sight optical axis, a line-of-sight visual axis by means of a compensation angle.

In an optional embodiment, the line-of-sight reconstruction module 1103 includes:

a first reconstruction unit 11031 configured to determine coordinates of a corneal curvature center according to the coordinates of the light source reflection point and a corneal curvature radius; and

a second reconstruction unit 11032 configured to determine, as the line-of-sight optical axis, a connecting line between the pupil center and the corneal curvature center according to the coordinates of the pupil center and the coordinates of the corneal curvature center.

According to the principle of camera imaging and the principles of light reflection and refraction, based on the position coordinates and internal and external parameters of the cameras that acquire the images as well as positions of the light sources, the corneal curvature center in the world coordinate system may be calculated and determined. The optical axis direction is the direction of the connecting line between the pupil center and the corneal curvature center. The optical axis direction may be determined by simply calculating the coordinates of the pupil center and the coordinates of the corneal curvature center. For example, the optical axis direction may be determined by subtracting the coordinates of the pupil center from the coordinates of the corneal curvature center and performing a modulo operation.

Specifically, according to optical principles, for each set of cameras for acquisition, the corneal curvature center and the pupil center are coplanar with the pupil imaging point on an imaging plane of the camera and coordinates of an optical center of the camera. When there are two coplanar relationships, a unit vector of an intersection line of the two coplanar planes is the line-of-sight optical axis, and the line connecting the pupil center and the corneal curvature center is the line-of-sight optical axis. The line-of-sight optical axis is determined based on a plane geometric relationship and optical principles.

Line-of-sight estimation apparatuses based on corneal pupil reflection usually can only find the optical axis of the eyeball. According to an actual structure of the human eye, the line of sight of the user is determined by the visual axis, and there is a compensation angle between the visual axis and the optical axis. The present application does not consider possible influences on the compensation angle of the user when the eye is deformed or abnormal. However, in a real situation, the eyeball and the cornea are not spheres, which leads to different reconstruction errors when a line-of-sight estimation method based on corneal pupil reflection reconstructs the optical axis of the eyeball when staring at different positions.

The structure of the human eye determines that there is a compensation angle between the line-of-sight optical axis and the line-of-sight visual axis, which is called a Kappa angle. Assuming that the compensation angle between the line-of-sight optical axis and the line-of-sight visual axis is a constant that does not change depending on the individual, the Kappa angle is used as a fixed compensation between the optical axis and the visual axis. Under this assumption, it is not necessary to estimate a Kappa compensation of the individual through correction. This embodiment may not calibrate the compensation angle, or simply calibrate the compensation angle through a few points, so that line-of-sight tracking is implemented more easily.

In an optional embodiment, the line-of-sight reconstruction module 1103 includes:

a third reconstruction unit 11033 configured to acquire a set of sample images when the user gazes at each preset gaze point;

a fourth reconstruction unit 11034 configured to determine first compensation angle samples according to sample features extracted from each set of sample images; and

a fifth reconstruction unit 11035 configured to traverse all the first compensation angle samples and acquire the compensation angle through screening and purification.

In an optional embodiment, the fourth reconstruction unit 11034 includes: extracting sample features for each set of sample images, and reconstructing a first line-of-sight optical axis according to the sample features; deriving a first line-of-sight visual axis based on real coordinates of the preset gaze point; and acquiring the first compensation angle samples according to the first line-of-sight optical axis and the first line-of-sight visual axis.

In an optional embodiment, the fifth reconstruction unit 11035 includes: finding a center point of all the first compensation angle samples, and screening and removing the samples that are not within a first threshold range; and continuing to traverse, screen, and purify all the remaining samples until a difference between a current center point and a previous center point is lower than a second threshold, and acquiring the compensation angle from all the purified samples.

Specifically, preset positions are known, and the gaze points are evenly distributed in space. The user gazes at a gaze point at a known position. The line-of-sight optical axis is reconstructed based on the corneal pupil reflection according to the sample features contained in the acquired sample images, and the line-of-sight visual axis is restored based on the pupil center coordinates and the preset gaze point. The compensation angle samples corresponding to the gaze points are further obtained. There will be errors, such as detection errors, in the process of acquiring the compensation angle sample set based on the preset gaze points. According to the present disclosure, the compensation angle samples are purified, abnormal samples are eliminated, and high-quality and reasonably distributed samples in the threshold range are kept, so that the accuracy of the compensation angle is ensured to a certain extent and the applicability of the final compensation angle is ensured. The present application may not calibrate or simply calibrate through a few points, so that line-of-sight tracking is implemented more easily.

In an actual scenario, since users who use the line-of-sight tracking system have different eyeball parameters, if a fixed compensation angle is adopted, it will affect the application of the line-of-sight direction tracking apparatus in a line-of-sight tracking scenario with higher accuracy. By introducing the dynamic compensation model, the line-of-sight reconstruction module performs personalized compensation calibration for different users respectively before the dynamic compensation model is used, so as to track a line-of-sight direction with higher accuracy.

In an optional embodiment, the line-of-sight reconstruction module 1103 further includes a dynamic compensation unit 11036 configured to determine a deviation between a predicted line-of-sight observation point and a real line-of-sight observation point through a dynamic compensation model for the acquired data, and acquire the compensation angle according to the deviation.

Specifically, in the application of an actual line-of-sight direction tracking apparatus, each frame of the acquired data is inputted into the trained dynamic compensation model to predict the deviation, which is the deviation between the predicted line-of-sight observation point and the real line-of-sight observation point, and the compensation angle is acquired according to the deviation. The predicted line-of-sight observation point may be calculated by the apparatus of reconstructing the line-of-sight optical axis. In addition, the embodiment of the present disclosure does not limit the type of the dynamic compensation model, which may be a neural network, a random model forest, etc.

Further, in order to implement personalized compensation calibration for different users, the dynamic compensation unit 11036 includes an initialization subunit to obtain a dynamic compensation model that fits a current user.

In an optional embodiment, the dynamic compensation unit 11036 includes an initialization subunit 36100 configured to initialize the dynamic compensation model before the dynamic compensation model is used, wherein the initialization subunit 36100 includes: a first initialization subunit 36110 configured to acquire a set of initial sample images when the user gazes at each preset initial point; and a second initialization subunit 36120 configured to extract initial sample features for each set of initial sample images and obtain the dynamic compensation model that fits the current user through few-shot learning initialization according to the initial sample features.

Specifically, the current user gazes at a preset initial point, and positions of the preset initial points are known and evenly distributed in space. A set of sample images are acquired for each preset initial point, and a number of gaze points acquired is at least 3. Further, initial sample features are extracted for each set of initial sample images, and the dynamic compensation model that fits the current user is obtained through few-shot learning initialization according to the initial sample features. The initial sample features extracted from the sample images include, but are not limited to, three-dimensional coordinates of a corneal sphere center, a Euler angle of the eyeball optical axis, a line-of-sight observation point calculated based on the optical axis, a human face deflection angle, etc. The dynamic compensation model may have a generalization ability of the model under a condition of a learning category change in a short time through few-shot learning, and the dynamic compensation model initialized by prior knowledge of the current user is utilized to provide a good search direction for data acquired by a subsequent current user, so that prediction errors are reduced and the efficiency of prediction deviation is improved at the same time. The embodiment of the present disclosure is not limited to few-shot learning methods, such as an MAML method.

In an optional embodiment, the dynamic compensation unit 11036 includes a training subunit 36200 configured to train the dynamic compensation model, wherein the training subunit 36200 includes: a first training subunit 36210 configured to acquire a plurality of sets of sample data when a plurality of users gaze at preset calibration points respectively; a second training subunit 36220 configured to clean the plurality of sets of sample data and extract training sample features from the cleaned plurality of sets of samples; and a third training subunit configured to train the initial dynamic compensation model by using few-shot learning according to the training sample features to acquire the trained dynamic compensation model.

In addition, the trained dynamic compensation model is acquired based on the initial dynamic compensation model through the training subunit 36200. A plurality of sets of sample data are acquired. Each test subject is required to gaze at several calibration points having preset positions and evenly distributed on the target object, and a same number of samples are acquired correspondingly. After initial sample data is obtained, the sample data is cleaned, and samples that do not meet requirements of a line-of-sight estimation algorithm are removed, such as samples having incomplete reflection points of the light source and serious blurring of a picture. Further, sample features are extracted for each set of cleaned and purified sample images, and the initial dynamic compensation model is trained by using few-shot learning according to the training sample features to acquire the trained dynamic compensation model. The training sample features extracted from multiple sets of sample data include, but are not limited to, three-dimensional coordinates of a corneal sphere center, an Euler angle of the eyeball optical axis, a line-of-sight observation point calculated based on the optical axis, a human face deflection angle, etc. After the acquired data is inputted, the trained dynamic compensation model can acquire a highly accurate deviation between the predicted line-of-sight observation point and the real line-of-sight observation point, so as to obtain a compensation angle with high accuracy.

In an actual line-of-sight direction tracking scenario, the line-of-sight reconstruction module firstly generates a dynamic compensation model that fits the current user in an initialization manner, and subsequently uses the generated dynamic compensation model to predict the deviation for the data acquired by the current user to further obtain a better compensation angle, and finally reconstructs a line-of-sight visual axis with high accuracy.

The point-of-sight determination module 1104 is configured to determine a point of sight on a target object according to the line-of-sight visual axis and a position of the target object in the world coordinate system.

The line-of-sight visual axis is located in the world coordinate system. To determine the point of sight of the visual axis on the target object, it is necessary to determine the position of the target object in the world coordinate system. The geometric position relationship may provide the position of the target object in the world coordinate system, and a plane of the target object in the world coordinate system is further determined. Specifically, the problem of determining the point of sight of the user is transformed into the problem of determining an intersection of a line-of-sight visual axis vector and a plane where the target object is located in the same coordinate system, and the present disclosure does not limit the method of solving the intersection problem.

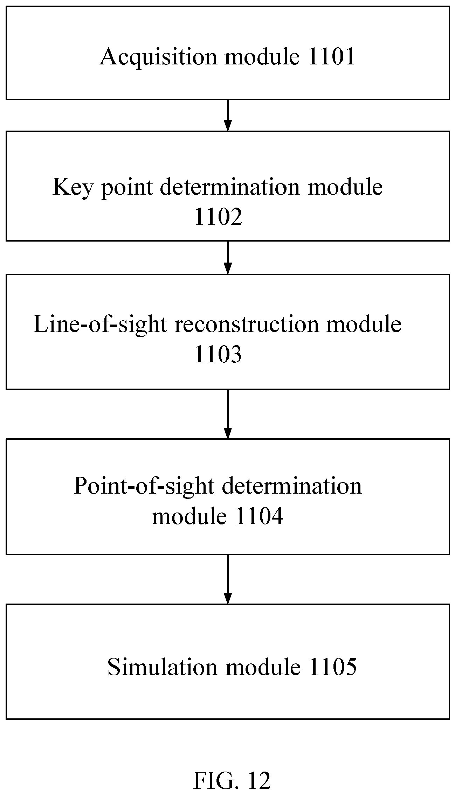

In order to reduce the hardware manufacturing cost and the efficiency of algorithm optimization, with reference to FIG. 12, a structural block diagram of another optional line-of-sight direction tracking apparatus according to an embodiment of the present disclosure is provided. As shown in FIG. 12, the line-of-sight direction tracking apparatus further includes a simulation module 1105 to simulate the tracking accuracy and anti-interference ability of the line-of-sight tracking system under various hardware conditions, eyeball states, algorithm designs, and other factors.

In an optional embodiment, the apparatus further includes a simulation module 1105 configured to perform simulation verification, analysis, and optimization through preset eyeball parameters, the compensation angle, the hardware calibration parameters, and a preset point of sight.

In an optional embodiment, the simulation module 1105 includes: a first simulation unit 11051 configured to perform, for the preset point of sight, simulation according to the preset eyeball parameters, the compensation angle, and the hardware calibration parameters to calculate a reconstructed light source imaging point and a reconstructed pupil imaging point; a second simulation unit 11052 configured to determine a predicted point of sight according to the line-of-sight direction tracking method based on the reconstructed light source imaging point and the reconstructed pupil imaging point; and a third simulation unit 11053 configured to perform statistical analysis according to comparison values of the preset point of sight and the predicted point of sight and carry out verification and optimization according to an analysis result.

In an optional embodiment, the first simulation unit 11051 includes:

a first simulation subunit 51100 configured to determine a light source-cornea-camera angle according to a corneal center in the preset eyeball parameters and the hardware calibration parameters, determine coordinates of a reconstructed light source reflection point based on the light source-cornea-camera angle and a corneal curvature radius in the preset eyeball parameters and based on the principle of spherical reflection, and calculate the reconstructed light source imaging point according to the coordinates of the reconstructed light source reflection point and based on the hardware calibration parameters; and

a second simulation subunit 51200 configured to determine a first visual axis according to coordinates of the preset point of sight and the corneal center in the preset eyeball parameters, derive a first optical axis based on the first visual axis and the compensation angle, determine coordinates of a reconstructed pupil center according to the first optical axis and based on a distance between the pupil center and the corneal center of the preset eyeball parameters, and calculate the reconstructed pupil imaging point according to the pupil center coordinates and based on the hardware calibration parameters.

Specifically, a line-of-sight tracking scenario is simulated as needed, and eyeball parameters and geometric position relationships are preset. The eye parameters include, but are not limited to, three-dimensional coordinates of an eyeball center, an eyeball radius, three-dimensional coordinates of a corneal sphere center, a corneal sphere radius, a distance from the eyeball center to the corneal sphere center, three-dimensional coordinates of a pupil center, three-dimensional coordinates of an iris center, an iris radius, a corneal refractive index, a lens refractive index, an eyeball optical axis, an eyeball visual axis and a Kappa angle, and other parameters used to model a three-dimensional model of an eyeball. Hardware calibration parameters include, but are not limited to, camera internal parameters, camera external parameters, camera distortion parameters, camera stereo calibration parameters, camera three-dimensional coordinates, light source three-dimensional coordinates and target object three-dimensional coordinates, etc. Image data needed to determine the line-of-sight direction based on corneal pupil reflection is simulated according to the set point of sight through the preset parameters, including three-dimensional coordinates of a reflection point of a reconstructed light source on the cornea (a reconstructed light source reflection point), projection coordinates of a light source reflection point on a camera image plane (a reconstructed light source imaging point) and projection coordinates of the pupil center on the camera image plane (a reconstructed pupil imaging point). Further, according to the inputted actual parameters, the simulation system verifies whether the implementation of the line-of-sight direction tracking method is correct, tests an influence of a disturbance added to the inputted parameters on a point-of-sight error, and searches for an optimal configuration method of the plurality of light sources, the plurality of cameras and the target object.

The simulation module 1105 supports the positioning of a plurality of preset gaze points to assist in verifying whether the implementation of the line-of-sight direction tracking method is correct. Specifically, by taking the target object included in the simulation system being a screen as an example, a plurality of gaze points with known positions appear in the screen. When a simulated eyeball in the simulation module 1105 gazes at a certain gaze point, a line-of-sight visual axis can be calculated according to the position of the gaze point and the coordinates of the corneal sphere center included in the preset eyeball parameters, then an optical axis is derived according to a preset compensation angle, and finally coordinates of the pupil center are reconstructed according to a preset distance from the pupil center to the corneal sphere center.

In an optional embodiment, the preset point of sight may be preset in advance or randomly generated at a plurality of different positions to simulate various line-of-sight angle tracking. Specifically, a plurality of preset points at different position are generated to simulate an error of line-of-sight tracking when the eyeball looks at different positions of the target object.

In an optional embodiment, the third simulation unit 11053 includes a third simulation subunit configured to verify whether the implementation of the line-of-sight direction tracking method is correct, test an influence of an added disturbance on a point-of-sight error, and determine a configuration method of the plurality of light sources, the plurality of cameras and the target object.

In a simulation process, actual hardware parameters and actual image pixel processing are not involved. Through the preset point of sight, based on the eyeball parameters and the hardware calibration parameters included in the simulation module 1105, the reconstructed light source reflection point and the reconstructed pupil imaging point are calculated, then the predicted point of sight is determined according to the line-of-sight direction tracking method based on corneal pupil reflection, and the correctness of the implementation of the line-of-sight direction tracking method is verified according to forward and backward verification; in this process, the simulation module 1105 involves multiple variables, including the geometric position relationships, the eyeball parameters and the point of sight, etc.; the abnormality of any variable will lead to a failure of verification of the correctness, and if a result of the failure of verification is obtained, the abnormal variable is further screened by controlling variables and other methods, so that the optimization efficiency of the line-of-sight tracking method can be improved.

In addition, the simulation module 1105 calculates the predicted point of sight after disturbance is added to the inputted parameters, and tests the influence of the disturbance on the point-of-sight error by comparing the predicted point of sight with the real point of sight. The simulation module 1105 may impose any type of disturbance on each parameter to simulate the performance of the designed line-of-sight tracking system in actual use. By comparing a predicted value of the point of sight calculated by using the disturbed parameters with a true value of the point of sight, as well as performing statistical analysis of a Euclidean distance, an angle error and a variance, the design and algorithm optimization of the following line-of-sight tracking system can be guided in a targeted manner. For example, if the camera calibration parameters are disturbed, the influence of a calibration error on the system can be tested; for key points such as the light source reflection point and the pupil center, the influence of an error of a key point detection algorithm on the system can be tested by disturbing image pixels. In addition, a large number of experiments and data analysis of the simulation module 1105 are performed to search for an optimal hardware configuration method for implementing the high-accuracy line-of-sight direction tracking apparatus, so that the hardware cost is reduced greatly and the efficiency of optimizing the line-of-sight tracking apparatus is improved.

According to another aspect of embodiments of the present disclosure, there is also provided an electronic device, including a processor; and a memory configured to store executable instructions of the processor, wherein the processor is configured to execute any one of the line-of-sight direction tracking methods by executing the executable instructions.

According to another aspect of embodiments of the present disclosure, there is also provided a storage medium, including a stored program, wherein, the program, when running, controls a device where the storage medium is located to execute any one of the line-of-sight direction tracking methods.

The serial numbers of the embodiments of the present disclosure are only for description, and do not represent the advantages and disadvantages of the embodiments.

In the embodiments of the present disclosure, the descriptions of various embodiment have their own emphasis, for those parts that are not detailed in one embodiment, reference may be made to the relevant descriptions of other embodiments.

In several embodiments provided by the present application, it should be understood that the disclosed technical contents may be implemented in other ways. The apparatus embodiments are merely illustrative, and for example, the division of the above units may be a logical function division, and in actual implementation, there may be another division, for example, multiple units or components may be combined or integrated into another coefficient, or some features may be omitted, or may not be executed. In addition, the shown or discussed mutual coupling or direct coupling or communication connection between each other may be an indirect coupling or communication connection through some interfaces, units or modules, and may be in an electrical or other form.

The units described as separate parts may or may not be physically separate, and the parts displayed as units may or may not be physical units, that is, they may be located in one position, or may be distributed on a plurality of units. Some or all of the units may be selected according to actual needs to achieve the purposes of the implementations.

In addition, functional units in the embodiments of the present disclosure may be integrated into one processing unit, or each unit may exist alone physically, or two or more units are integrated into one unit. The integrated unit may be implemented in the form of hardware or software functional units.

If the integrated unit is implemented in the form of a software functional unit and sold or used as an independent product, it can be stored in a computer-readable storage medium. Based on such understanding, the technical solution of the present disclosure, or a part of the technical solution that contributes to the prior art, or a part or all of the technical solution, may be embodied in the form of a software product; the computer software product is stored in a storage medium including instructions for causing a computer device (which may be a personal computer, a server, or a network device) to perform all or part of the steps of the method according to the embodiments of the present disclosure. The aforementioned storage media include various media capable of storing program codes: a U disk, a read-only memory (ROM), a random access memory (RAM), a mobile hard disk, a magnetic disk or an optical disk, etc.

While the foregoing is only directed to the preferred embodiments of the present disclosure, it should be noted that for those of ordinary skill in the art, various modifications and refinements may be made therein without departing from the principles of the present disclosure and such modifications and refinements are also to be considered as within the protection scope of the present disclosure.

**Claims**

1. A line-of-sight direction tracking method, comprising:

   providing corneal reflection for an eye of a user by using a plurality of light sources, and capturing images comprising a face of the user by using a plurality of cameras;
   determining coordinates of a light source reflection point and coordinates of a pupil center in a world coordinate system by means of a human eye feature set acquired from the images comprising the face, based on hardware calibration parameters;
   determining a line-of-sight optical axis according to the coordinates of the light source reflection point and the coordinates of the pupil center, and reconstructing, based on the line-of-sight optical axis, a line-of-sight visual axis by means of a compensation angle; and

determining a point of sight on a target object according to the line-of-sight visual axis and a position of the target object in the world coordinate system.

2. The line-of-sight direction tracking method according to claim 1, wherein the human eye feature set comprises a light source imaging point and a pupil imaging point.

3. The line-of-sight direction tracking method according to claim 1, wherein the world coordinate system is selected from any one of a light source coordinate system, a camera coordinate system, and a target object coordinate system.

4. The line-of-sight direction tracking method according to claim 1, wherein the method further comprises performing simulation verification, analysis, and optimization through preset eyeball parameters, the compensation angle, the hardware calibration parameters, and a preset point of sight.

5. The line-of-sight direction tracking method according to claim 1, wherein the plurality of cameras, the plurality of light sources, and the target object face the user, and fields of view of the plurality of cameras do not comprise the plurality of light sources and the target object.

6. The line-of-sight direction tracking method according to claim 1, wherein the hardware calibration parameters comprise:
internal and external parameters of the plurality of camera coordinate systems and geometric position relationships, wherein the geometric position relationships comprise a first position relationship between the plurality of light source coordinate systems and the plurality of camera coordinate systems, a second position relationship between the plurality of light source coordinate systems and the target object coordinate system, and a third position relationship between the plurality of camera coordinate systems and the target object coordinate system.

7. The line-of-sight direction tracking method according to claim 6, wherein the geometric position relationships are obtained based on the internal and external parameters of the plurality of cameras and by utilizing at least one of a plane mirror and an auxiliary camera to transmit calibration information for calibration.

8. The line-of-sight direction tracking method according to claim 6, wherein determining coordinates of a light source reflection point and coordinates of a pupil center in a world coordinate system by means of a face feature set acquired from the images comprising the face, based on hardware calibration parameters, comprises:

in a case where the world coordinate system is the light source coordinate system, determining, based on the face feature set, the coordinates of the light source reflection point and the coordinates of the pupil center in the light source coordinate system through the internal and external parameters of the plurality of cameras and based on the first position relationship, or based on the second position relationship and the third position relationship;
in a case where the world coordinate system is the camera coordinate system, determining, based on the face feature set, the coordinates of the light source reflection point and the coordinates of the pupil center in the plurality of camera coordinate systems through the internal and external parameters of the plurality of cameras; and
in a case where the world coordinate system is the target coordinate system, determining, based on the face feature set, the coordinates of the light source reflection point and the coordinates of the pupil center in the target object coordinate system through the internal and external parameters of the plurality of cameras and based on the third position relationship, or based on the first position relationship with the second position relationship.

9. The line-of-sight direction tracking method according to claim 1, wherein determining the line-of-sight optical axis according to the coordinates of the light source reflection point and the coordinates of the pupil center comprises:

determining coordinates of a corneal curvature center according to the coordinates of the light source reflection point and a corneal curvature radius; and
determining, as the line-of-sight optical axis, a connecting line between the pupil center and the corneal curvature center according to the coordinates of the pupil center and the coordinates of the corneal curvature center.

10. The line-of-sight direction tracking method according to claim 6, wherein obtaining the geometric position relationships based on the internal and external parameters of the plurality of cameras and by utilizing a plane mirror and an auxiliary camera to transmit calibration information for calibration comprises:

acquiring, by a first auxiliary camera, a plurality of first marker images of the target object containing first markers reflected by the plane mirror in a plurality of different poses;

calculating the third position relationship based on an orthogonal constraint according to the plurality of first marker images and based on the internal and external parameters of the plurality of cameras;

acquiring, by a second auxiliary camera, second marker images containing the plurality of light sources, and acquiring the first position relationship based on the internal and external parameters of the plurality of cameras and based on the second marker images, wherein the second auxiliary camera is a stereo vision system; and determining the second position relationship according to the first position relationship and the third position relationship.

11. The line-of-sight direction tracking method according to claim 6, wherein obtaining the geometric position relationships based on the internal and external parameters of the plurality of cameras and by utilizing an auxiliary camera to transmit calibration information for calibration comprises:

acquiring, by a third auxiliary camera, third marker images containing the plurality of light sources, and acquiring the first position relationship based on the internal and external parameters of the plurality of cameras and based on the third marker images, wherein the third auxiliary camera is a stereo vision system;

configuring a fourth auxiliary camera to have a field of view comprising the plurality of cameras and the third auxiliary camera, disposing a calibration plate beside the third auxiliary camera, acquiring, by the plurality of cameras, fourth marker images containing a region of the calibration plate, and acquiring, by the third auxiliary camera, fifth marker images of the target object containing fifth markers;

by taking a position relationship between the fourth auxiliary camera and the plurality of cameras as a pose conversion bridge, determining the third position relationship according to the fourth marker images and the fifth marker images and based on internal and external parameters of the third auxiliary camera and the internal and external parameters of the plurality of cameras; and

determining the second position relationship according to the first position relationship and the third position relationship.

12. The line-of-sight direction tracking method according to claim 6, wherein obtaining the geometric position relationships based on the internal and external parameters of the plurality of cameras and by utilizing a plane mirror to transmit calibration information for calibration comprises:

with the plane mirror having no less than 4 markers pasted thereon as an aid, acquiring, by the plurality of cameras, reflected images containing the plurality of light sources, the target object, and the markers;

calculating marker coordinates of the respective markers, mirrored light source coordinates of the plurality of light sources, and mirrored target object coordinates of the target object in the plurality of camera coordinate systems according to the reflected images;

reconstructing a mirror plane according to all the marker coordinates, and determining the first position relationship and the third position relationship based on the mirrored light source coordinates and the mirrored target object coordinates according to a principle of specular reflection; and

determining the second position relationship according to the first position relationship and the third position relationship.

13. The line-of-sight direction tracking method according to claim 1, wherein before reconstructing, based on the line-of-sight optical axis, a line-of-sight visual axis by means of a compensation angle, the method further comprises:

acquiring a set of sample images when the user gazes at each preset gaze point;

determining first compensation angle samples according to sample features extracted from each set of sample images; and

traversing all the first compensation angle samples and acquiring the compensation angle through screening and purification.

14. The line-of-sight direction tracking method according to claim 13, wherein determining first compensation angle samples according to sample features extracted from each set of sample images comprises:

extracting sample features for each set of sample images, and reconstructing a first line-of-sight optical axis according to the sample features;

deriving a first line-of-sight visual axis based on real coordinates of the preset gaze point; and

acquiring the first compensation angle samples according to the first line-of-sight optical axis and the first line-of-sight visual axis.

15. The line-of-sight direction tracking method according to claim 13, wherein traversing all the first compensation angle samples and acquiring the compensation angle through screening and purification comprises:

> finding a center point of all the first compensation angle samples, and screening and removing the samples that are not within a first threshold range; and
> continuing to traverse, screen, and purify all the remaining samples until a difference between a current center point and a previous center point is lower than a second threshold, and acquiring the compensation angle from all the purified samples.

16. The line-of-sight direction tracking method according to claim 1, wherein before the reconstructing, based on the line-of-sight optical axis, a line-of-sight visual axis by means of a compensation angle, the method further comprises:
determining a deviation between a predicted line-of-sight observation point and a real line-of-sight observation point through a dynamic compensation model for the acquired data, and acquiring the compensation angle according to the deviation.

17. The line-of-sight direction tracking method according to claim 16, wherein initializing the dynamic compensation model before the dynamic compensation model is used comprises:

> acquiring a set of initial sample images when the user gazes at each preset initial point; and
> extracting initial sample features for each set of initial sample images, and obtaining the dynamic compensation model that fits the current user through few-shot learning initialization according to the initial sample features.

18. The line-of-sight direction tracking method according to claim 16, wherein training the dynamic compensation model comprises:

> acquiring a plurality of sets of sample data when a plurality of users gaze at preset calibration points respectively;
> cleaning the plurality of sets of sample data, and extracting training sample features from the cleaned plurality of sets of samples; and
> training an initial dynamic compensation model according to the training sample features by using few-shot learning to acquire the trained dynamic compensation model.

19. The line-of-sight direction tracking method according to claim 4, wherein performing simulation verification, analysis, and optimization through preset eyeball parameters, the compensation angle, the hardware calibration parameters, and a preset point of sight comprises:

> performing, for the preset point of sight, simulation according to the eyeball parameters, the compensation angle, and the hardware calibration parameters to calculate a reconstructed light source imaging point and a reconstructed pupil imaging point;
> determining a predicted point of sight according to the line-of-sight direction tracking method based on the reconstructed light source imaging point and the reconstructed pupil imaging point; and
> performing statistical analysis according to comparison values of the preset point of sight and the predicted point of sight and carrying out verification and optimization according to an analysis result.

20. The line-of-sight direction tracking method according to claim 19, wherein performing, for the preset point of sight, simulation according to the eyeball parameters, the compensation angle, and the hardware calibration parameters to calculate a reconstructed light source imaging point and a reconstructed pupil imaging point comprises:

> determining a light source-cornea-camera angle according to a corneal center in the preset eyeball parameters and the hardware calibration parameters, determining coordinates of a reconstructed light source reflection point based on the light source-cornea-camera angle and a corneal curvature radius in the preset eyeball parameters and based on a principle of spherical reflection, and calculating the reconstructed light source imaging point according to the coordinates of the reconstructed light source reflection point and based on the hardware calibration parameters; and
> determining a first visual axis according to coordinates of the preset point of sight and the corneal center in the preset eyeball parameters, deriving a first optical axis based on the first visual axis and the compensation angle, determining coordinates of a reconstructed pupil center according to the first optical axis and based on a distance between the pupil center and the corneal center of the preset eyeball parameters, and calculating the reconstructed pupil imaging point according to the coordinates of the pupil center and based on the hardware calibration parameters.

21. The line-of-sight direction tracking method according to claim 19, wherein the preset point of sight is preset in advance or randomly generated at a plurality of different positions to simulate tracking of various line-of-sight angles.

**22.** The line-of-sight direction tracking method according to claim 19, wherein performing statistical analysis according to the preset point of sight and the predicted point of sight and carrying out verification and optimization according to an analysis result comprises:
verifying whether implementation of the line-of-sight direction tracking method is correct, testing an influence of an added disturbance on a point-of-sight error, and determining a configuration method of the plurality of light sources, the plurality of cameras, and the target object.

**23.** A line-of-sight direction tracking apparatus, comprising:

an acquisition module configured to provide corneal reflection for an eye of a user by using a plurality of light sources, and capture images comprising a face of the user by using a plurality of cameras;
a key point determination module configured to determine coordinates of a light source reflection point and coordinates of a pupil center in a world coordinate system by means of a human eye feature set acquired from the images comprising the face, based on hardware calibration parameters;
a line-of-sight reconstruction module configured to determine a line-of-sight optical axis according to the coordinates of the light source reflection point and the coordinates of the pupil center, and reconstruct, based on the line-of-sight optical axis, a line-of-sight visual axis by means of a compensation angle; and
a point-of-sight determination module configured to determine a point of sight on a target object according to the line-of-sight visual axis and a position of the target object in the world coordinate system.

**24.** The apparatus according to claim 23, wherein the apparatus further comprises a simulation module configured to perform simulation verification, analysis, and optimization through preset eyeball parameters, the compensation angle, the hardware calibration parameters, and a preset point of sight.

**25.** The apparatus according to claim 23, wherein the hardware calibration parameters comprise:
internal and external parameters of the plurality of camera coordinate systems and geometric position relationships, wherein the geometric position relationships comprise a first position relationship between the plurality of light source coordinate systems and the plurality of camera coordinate systems, a second position relationship between the plurality of light source coordinate systems and the target object coordinate system, and a third position relationship between the plurality of camera coordinate systems and the target object coordinate system.

**26.** The apparatus according to claim 25, wherein the key point determination module comprises:
a calibration unit configured to obtain the geometric position relationships based on the internal and external parameters of the plurality of cameras and by utilizing at least one of a plane mirror and an auxiliary camera to transmit calibration information for calibration.

**27.** The apparatus according to claim 25, wherein the key point determination module comprises:

a first determination unit configured to, in a case where the world coordinate system is the light source coordinate system, determine, based on the face feature set, the coordinates of the light source reflection point and the coordinates of the pupil center in the light source coordinate system through the internal and external parameters of the plurality of cameras and based on the first position relationship, or based on the second position relationship and the third position relationship;
a second determination unit configured to, in a case where the world coordinate system is the camera coordinate system, determine, based on the face feature set, the coordinates of the light source reflection point and the coordinates of the pupil center in the plurality of camera coordinate systems through the internal and external parameters of the plurality of cameras; and
a third determination unit configured to, in a case where the world coordinate system is the target coordinate system, determine, based on the face feature set, the coordinates of the light source reflection point and the coordinates of the pupil center in the target object coordinate system through the internal and external parameters of the plurality of cameras and based on the third position relationship, or based on the first position relationship with the second position relationship.

**28.** The apparatus according to claim 23, wherein the line-of-sight reconstruction module comprises:

a first reconstruction unit configured to determine coordinates of a corneal curvature center according to the coordinates of the light source reflection point and a corneal curvature radius; and
a second reconstruction unit configured to determine, as the line-of-sight optical axis, a connecting line between the pupil center and the corneal curvature center according to the coordinates of the pupil center and the coordinates of the corneal curvature center.

29. The apparatus according to claim 26, wherein the calibration unit comprises a first calibration unit configured to obtain the geometric position relationships based on the internal and external parameters of the plurality of cameras and by utilizing the plane mirror and the auxiliary camera to transmit calibration information for calibration, wherein the first calibration unit comprises:

   a first calibration subunit configured to acquire, by a first auxiliary camera, a plurality of first marker images of the target object containing first markers reflected by the plane mirror in a plurality of different poses;
   a second calibration subunit configured to calculate the third position relationship based on an orthogonal constraint according to the plurality of first marker images and based on the internal and external parameters of the plurality of cameras;
   a third calibration subunit configured to acquire, by a second auxiliary camera, second marker images containing the plurality of light sources, and acquire the first position relationship based on the internal and external parameters of the plurality of cameras and based on the second marker images, wherein the second auxiliary camera is a stereo vision system; and
   a fourth calibration subunit configured to determine the second position relationship according to the first position relationship and the third position relationship.

30. The apparatus according to claim 26, wherein the calibration unit comprises a second calibration unit configured to obtain the geometric position relationships based on the internal and external parameters of the plurality of cameras and by utilizing the auxiliary camera to transmit calibration information for calibration, wherein the second calibration unit comprises:

   a fifth calibration subunit configured to acquire, by a third auxiliary camera, third marker images containing the plurality of light sources, and acquire the first position relationship based on the internal and external parameters of the plurality of cameras and based on the third marker images, wherein the third auxiliary camera is a stereo vision system;
   a sixth calibration subunit configured to configure a fourth auxiliary camera to have a field of view comprising the plurality of cameras and the third auxiliary camera, dispose a calibration plate beside the third auxiliary camera, acquire, by the plurality of cameras, fourth marker images containing a region of the calibration plate, and acquire, by the third auxiliary camera, fifth marker images of the target object containing fifth markers;
   a seventh calibration subunit configured to, by taking a position relationship between the fourth auxiliary camera and the plurality of cameras as a pose conversion bridge, determine the third position relationship according to the fourth marker images and the fifth marker images and based on internal and external parameters of the third auxiliary camera and the internal and external parameters of the plurality of cameras; and
   an eighth calibration subunit configured to determine the second position relationship according to the first position relationship and the third position relationship.

31. The apparatus according to claim 26, wherein the calibration unit comprises a third calibration unit configured to obtain the geometric position relationships based on the internal and external parameters of the plurality of cameras and by utilizing the plane mirror to transmit calibration information for calibration, wherein the third calibration unit comprises:

   a ninth calibration subunit configured to, with the plane mirror having no less than 4 markers pasted thereon as an aid, acquire, by the plurality of cameras, reflected images containing the plurality of light sources, the target object, and the markers;
   a tenth calibration subunit configured to calculate marker coordinates of the respective markers, mirrored light source coordinates of the plurality of light sources, and mirrored target object coordinates of the target object in the plurality of camera coordinate systems according to the reflected images;
   an eleventh calibration subunit configured to reconstruct a mirror plane according to all the marker coordinates, and determine the first position relationship and the third position relationship based on the mirrored light source coordinates and the mirrored target object coordinates according to a principle of specular reflection; and
   a twelfth calibration subunit configured to determine the second position relationship according to the first position relationship and the third position relationship.

32. The apparatus according to claim 23, wherein the line-of-sight reconstruction module comprises:

a third reconstruction unit configured to acquire a set of sample images when the user gazes at each preset gaze point;

a fourth reconstruction unit configured to determine first compensation angle samples according to sample features extracted from each set of sample images; and

a fifth reconstruction unit configured to traverse all the first compensation angle samples and acquire the compensation angle through screening and purification.

33. The apparatus according to claim 23, wherein the line-of-sight reconstruction module further comprises:

a dynamic compensation unit configured to determine a deviation between a predicted line-of-sight observation point and a real line-of-sight observation point through a dynamic compensation model for the acquired data, and acquire the compensation angle according to the deviation.

34. The apparatus according to claim 33, wherein the dynamic compensation unit comprises an initialization subunit configured to initialize the dynamic compensation model before the dynamic compensation model is used, wherein the initialization subunit comprises:

a first initialization subunit configured to acquire a set of initial sample images when the user gazes at each preset initial point; and

a second initialization subunit configured to extract initial sample features for each set of initial sample images, and obtain the dynamic compensation model that fits the current user through few-shot learning initialization according to the initial sample features.

35. The apparatus according to claim 33, wherein the dynamic compensation unit comprises a training subunit configured to train the dynamic compensation model, wherein the training subunit comprises:

a first training subunit configured to acquire a plurality of sets of sample data when a plurality of users gaze at preset calibration points respectively;

a second training subunit configured to clean the plurality of sets of sample data and extract training sample features from the cleaned plurality of sets of samples; and

a third training subunit configured to train an initial dynamic compensation model according to the training sample features by using few-shot learning to acquire the trained dynamic compensation model.

36. The apparatus according to claim 24, wherein the simulation module comprises:

a first simulation unit configured to perform, for the preset point of sight, simulation according to the eyeball parameters, the compensation angle, and the hardware calibration parameters to calculate a reconstructed light source imaging point and a reconstructed pupil imaging point;

a second simulation unit configured to determine a predicted point of sight according to the line-of-sight direction tracking method based on the reconstructed light source imaging point and the reconstructed pupil imaging point; and

a third simulation unit configured to perform statistical analysis according to comparison values of the preset point of sight and the predicted point of sight and carry out verification and optimization according to an analysis result.

37. The apparatus according to claim 36, wherein the first simulation unit comprises:

a first simulation subunit configured to determine a light source-cornea-camera angle according to a corneal center in the preset eyeball parameters and the hardware calibration parameters, determine coordinates of a reconstructed light source reflection point based on the light source-cornea-camera angle and a corneal curvature radius in the preset eyeball parameters and based on a principle of spherical reflection, and calculate the reconstructed light source imaging point according to the coordinates of the reconstructed light source reflection point and based on the hardware calibration parameters; and

a second simulation subunit configured to determine a first visual axis according to coordinates of the preset point of sight and the corneal center in the preset eyeball parameters, derive a first optical axis based on the first visual axis and the compensation angle, determine coordinates of a reconstructed pupil center according to the first optical axis and based on a distance between the pupil center and the corneal center of the preset eyeball parameters, and calculate the reconstructed pupil imaging point according to the coordinates of the pupil center and based on the hardware calibration parameters.

38. The apparatus according to claim 36, wherein the third simulation unit comprises:

a third simulation subunit configured to verify whether implementation of the line-of-sight direction tracking method is correct, test an influence of an added disturbance on a point-of-sight error, and determine a configuration method of the plurality of light sources, the plurality of cameras, and the target object.

39. A storage medium, comprising a stored program, wherein the program, when running, controls a device where the storage medium is located to execute the line-of-sight direction tracking method according to any one of claims 1 to 22.

40. An electronic device, comprising:

a processor; and
a memory configured to store instructions executable by the processor,
wherein the processor is configured to execute the line-of-sight direction tracking method according to any one of claims 1 to 22 by executing the executable instructions.

| | |
|---|---|
| providing corneal reflection for eyes of a user by using a plurality of light sources, and capturing images including a face of the user by using a plurality of cameras | S100 |
| determining coordinates of a light source reflection point and coordinates of a pupil center in a world coordinate system by means of a human eye feature set acquired from the images including the face, based on hardware calibration parameters | S200 |
| determining a line-of-sight optical axis according to the coordinates of the light source reflection point and the coordinates of the pupil center, and reconstructing, based on the line-of-sight optical axis, a line-of-sight visual axis by means of a compensation angle | S300 |
| determining a point of sight on at least one target object according to the line-of-sight visual axis and a position of the at least one target object in the world coordinate system | S400 |

FIG. 1

FIG. 2

FIG. 3

FIG. 4

acquiring, by a first auxiliary camera, first marker images of the at least one target object containing first markers reflected by a plane mirror in a plurality of different poses, and calculating a third position relationship based on an orthogonal constraint according to the plurality of first marker images and based on internal and external parameters of the plurality of cameras

S310

acquiring, by a second auxiliary camera, second marker images containing the plurality of light sources, and acquiring the first position relationship based on the internal and external parameters of the plurality of cameras and based on the second marker images, wherein the second auxiliary camera is a stereo vision system

S311

determining a second position relationship according to the first position relationship and the third position relationship.

S312

FIG. 5

FIG. 6

acquiring, by a third auxiliary camera, third marker images containing the plurality of light sources and fourth marker images of the at least one target object containing second markers, wherein the third auxiliary camera is a stereo vision system — S320

configuring a fourth auxiliary camera to have a field of view including the plurality of cameras and the third auxiliary camera, disposing a calibration plate beside the third auxiliary camera, collecting, by the plurality of cameras, fourth marker images containing calibration plate region, and acquiring, by the third auxiliary camera, fifth marker images of the at least one target object containing fifth markers — S321

by taking a position relationship between the fourth auxiliary camera and the plurality of cameras as a pose conversion bridge, determining the third position relationship according to the fourth marker images and the fifth marker images and based on the internal and external parameters of the third auxiliary camera and the plurality of cameras — S322

determining a second position relationship according to the first position relationship and the third position relationship. — S323

FIG. 7

500

106

112 114

110 116

103 101 102 104

FIG. 8

with the plane mirror having no less than 4 markers pasted there on as an aid, acquiring, by the plurality of cameras, reflected images containing the plurality of light sources, the target object and the markers — S330

calculating marker coordinates of the respective markers, mirrored light source coordinates of the plurality of light sources, and mirrored target object coordinates of the target object in the plurality of camera coordinate systems according to the reflected images — S331

reconstructing a mirror plane according to all the marker coordinates, and determining the first position relationship and the third position relationship based on the mirrored light source coordinates and the mirrored target object coordinates according to a principle of specular reflection — S332

determining the second position relationship according to the first position relationship and the third position relationship — S333

FIG. 9

FIG. 10

Acquisition module 1101

Key point determination module 1102

Line-of-sight reconstruction module 1103

Point-of-sight determination module 1104

FIG. 11

Acquisition module 1101

Key point determination module
1102

Line-of-sight reconstruction module
1103

Point-of-sight determination
module 1104

Simulation module 1105

FIG. 12

## INTERNATIONAL SEARCH REPORT

International application No.

**PCT/CN2022/108896**

### A. CLASSIFICATION OF SUBJECT MATTER

G06T 7/246(2017.01)i

According to International Patent Classification (IPC) or to both national classification and IPC

### B. FIELDS SEARCHED

Minimum documentation searched (classification system followed by classification symbols)

G06T; G06K; G06F

Documentation searched other than minimum documentation to the extent that such documents are included in the fields searched

Electronic data base consulted during the international search (name of data base and, where practicable, search terms used)

CNPAT, CNKI, WPI, EPODOC: 视线, 视点, 相机, 摄像, 光源, 反射, 反光, 瞳孔, 坐标, 轴, viewpoint, sight, view, visual, line, point, camera, photo, illuminant, light, reflect, pupil, coordinate, axis

### C. DOCUMENTS CONSIDERED TO BE RELEVANT

| Category* | Citation of document, with indication, where appropriate, of the relevant passages | Relevant to claim No. |
|---|---|---|
| PX | CN 113808160 A (ARCSOFT TECHNOLOGY CO., LTD.) 17 December 2021 (2021-12-17) claims 1-40 | 1-40 |
| Y | CN 109696954 A (INSTITUTE OF COMPUTING TECHNOLOGY, CHINESE ACADEMY OF SCIENCES et al.) 30 April 2019 (2019-04-30) description, paragraphs [0005]-[0029] and [0044]-[0209] | 1-40 |
| Y | CN 106547341 A (HYUNDAI MOTOR CO., LTD.) 29 March 2017 (2017-03-29) description, paragraphs [0006]-[0020] | 1-40 |
| A | CN 107358217 A (BEIJING 7INVENSUN TECHNOLOGY CO., LTD.) 17 November 2017 (2017-11-17) entire document | 1-40 |
| A | US 2013329957 A1 (Ebisawa, Yoshinobu) 12 December 2013 (2013-12-12) entire document | 1-40 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 September 2022** | **26 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/108896**

| Patent document cited in search report | | | Publication date (day/month/year) | Patent family member(s) | | | Publication date (day/month/year) |
|---|---|---|---|---|---|---|---|
| CN | 113808160 | A | 17 December 2021 | None | | | |
| CN | 109696954 | A | 30 April 2019 | None | | | |
| CN | 106547341 | A | 29 March 2017 | KR | 20170034681 | A | 29 March 2017 |
| | | | | US | 2017083746 | A1 | 23 March 2017 |
| CN | 107358217 | A | 17 November 2017 | None | | | |
| US | 2013329957 | A1 | 12 December 2013 | JP | WO2012077713 | A1 | 22 May 2014 |
| | | | | WO | 2012077713 | A1 | 14 June 2012 |
| | | | | EP | 2649932 | A1 | 16 October 2013 |

Form PCT/ISA/210 (patent family annex) (January 2015)

**REFERENCES CITED IN THE DESCRIPTION**

**Patent documents cited in the description**

• CN 202110897215